# EUROPÄISCHE PATENTANMELDUNG

(11) **EP 3 223 394 A1**
(43) Veröffentlichungstag der Anmeldung: **27.09.2017**
(21) Anmeldenummer: 16161663.6
(22) Anmeldetag: 22.03.2016
(51) Int. Cl.: H02K 3/24, H02K 3/34

(54) **FLUIDGEKÜHLTES AKTIVTEIL, ELEKTRISCHE MASCHINE UND ANTRIEBSSYSTEM**

(71) Anmelder: Siemens Aktiengesellschaft, 80333 München (DE)
(72) Erfinder: Burghard, Matthias Johannes, 12099 Berlin (DE); Bethge, Andreas, 13587 Berlin (DE); Festa, Marco, 14612 Falkensee (DE); Centner, Matthias, 10555 Berlin (DE); Sabelfeld, Ilja, 10119 Berlin (DE)

(57) **Zusammenfassung**

Die Erfindung betrifft ein fluidgekühltes Aktivteil (1) für eine elektrische Maschine (38), wobei das Aktivteil (1) im Wesentlichen zylinderförmig oder hohlzylinderförmig ausgestaltet ist, aufweisend axial verlaufende Nuten (2), zumindest einen elektrischen Leiter (3), der jeweils zumindest abschnittsweise in der jeweiligen Nut (2) angeordnet ist und der sich aus einer Mehrzahl von Teilleitern (4) zusammensetzt, eine jeweilige Hauptisolierung (5), welche zwischen dem jeweiligen Leiter (3) und der jeweiligen Nut (2) angeordnet ist, und eine jeweilige Teilleiterisolierung (6), welche den jeweiligen Teilleiter (4) umgibt. Weiterhin betrifft die Erfindung eine elektrische Maschine (38) aufweisend ein derartiges, als Stator (39) ausgestaltetes, fluidgekühltes Aktivteil (1) und/oder ein derartiges, als drehbar gelagerten Rotor (40) ausgestaltetes, fluidgekühltes Aktivteil (1), wobei die elektrische Maschine (38) mit einer elektrischen Spannung im Bereich von zumindest einigen kV, vorzugsweise einigen 10 kV, betreibbar ist. Schließlich betrifft die Erfindung ein Antriebssystem (41) aufweisend eine derartige elektrische Maschine (38) und eine Fluidenergiemaschine (42) für das Fluid, wobei die Fluidenergiemaschine (42) als Kompressor oder-, insbesondere für ein Prozessgas, oder als Pumpe, insbesondere für eine Prozessflüssigkeit, ausgestaltet ist. Um unter anderem ein fluidgekühltes Aktivteil bereitzustellen, welches leistungsstark, kompakt und insbesondere beständig im Umfeld des Fluides bzw. eines Prozessfluides ist, wird unter anderem vorgeschlagen, dass das Aktivteil (1) einen jeweiligen Kühlkanal (7) zur Führung des Fluides, insbesondere eines Prozessfluides, aufweist, wobei der jeweilige Kühlkanal (7) zwischen der jeweiligen Hauptisolierung (5) und der jeweiligen Teilleiterisolierung (6) angeordnet ist.

## Beschreibung

Die Erfindung betrifft ein fluidgekühltes Aktivteil für eine elektrische Maschine, wobei das Aktivteil im Wesentlichen zylinderförmig oder hohlzylinderförmig ausgestaltet ist, aufweisend
- axial verlaufende Nuten,
- zumindest einen elektrischen Leiter, der jeweils zumindest abschnittsweise in der jeweiligen Nut angeordnet ist und der sich aus einer Mehrzahl von Teilleitern zusammensetzt,
- eine jeweilige Hauptisolierung, welche zwischen dem jeweiligen Leiter und der jeweiligen Nut angeordnet ist, und
- eine jeweilige Teilleiterisolierung, welche den jeweiligen Teilleiter umgibt.

Weiterhin betrifft die Erfindung eine elektrische Maschine aufweisend
- ein derartiges, als Stator ausgestaltetes, fluidgekühltes Aktivteil und/oder
- ein derartiges, als drehbar gelagerten Rotor ausgestaltetes, fluidgekühltes Aktivteil,
wobei die elektrische Maschine mit einer elektrischen Spannung im Bereich von zumindest einigen kV, vorzugsweise einigen 10 kV, betreibbar ist.

Schließlich betrifft die Erfindung ein Antriebssystem aufweisend eine derartige elektrische Maschine und eine Fluidenergiemaschine für das Fluid, wobei die Fluidenergiemaschine bspw. als Kompressor, insbesondere für ein Prozessgas, oder als Pumpe, insbesondere für eine Prozessflüssigkeit, ausgestaltet ist.

Ein derartiges Aktivteil und eine derartige elektrische Maschine kommen bspw. bei der Förderung von Öl und Gas zum Einsatz. Ein Trend bei der Entwicklung von Maschinen für den Öl& Gas-Bereich ist die Integration des Antriebsmotors in das Gehäuse der Arbeitsmaschine mit dem primären Ziel, auf die Abdichtung an rotierenden Teilen verzichten zu können. Man spricht von hermetisch abgedichteten Systemen. Dadurch entsteht aber auch die Möglichkeit, dass Motorkomponenten mit dem Prozessgas in Berührung kommen. In vielen Anwendungen wird sogar angestrebt, den Motor direkt durch das Prozessgas im Primärkühlkreislauf zu kühlen.

Prozessgase können chemisch aggressive Medien enthalten, welche dann zu einer beschleunigten Alterung der Materialien führen. Oft muss unter Prozessgas ein wenig aufbereitetes Erdgas verstanden werden, wie es aus einem Bohrloch gewonnen wird. Des Weiteren entspricht der Gasdruck im Kühlkreislauf etwa dem statischen Druck des Prozessgases und ist - abhängig von der Prozessführung und besonderen Situationen - starken Schwankungen unterworfen. Drücke bis 200 bar können auftreten. Ein drittes Problem ist der häufig hohe Wassergehalt im Gas, welcher eine erhöhte elektrische Leitfähigkeit mit sich bringt. In vielen Fällen ist das einströmende Kühlgas mit Wasser gesättigt. Auch andere Flüssigkeiten können Bestandteil des Kühlmediums sein.

Passivteile sind gewöhnlich durch metallische Beschichtungen oder den Einsatz alternativer Materialien vor Alterung zu schützen. Bei den Aktivteilen des Motors sind jedoch andere Materialparameter wie die magnetische Permeabilität oder die elektrische Leitfähigkeit von so großer Bedeutung, dass der Einsatz beständiger metallischer Materialien oder die Beschichtung mit solchen Materialien zu einem sehr deutlich schlechteren Betriebsverhalten führen würde.

Zur Isolierung der Wicklungen einer elektrischen Maschine werden traditionell Folien- und Gewebelagen mit Zusatzkomponenten aufgebracht und anschließend mit einem Kunstharz getränkt. Viele der verwendeten Materialien sind nicht beständig gegen die oben beschriebenen Gase bzw. Gas-Flüssigkeits-Zusammensetzungen. Ein konventionelles Isoliersystem kann bereits durch hohen statischen Druck zerstört werden.

Eine Variante von Motoren für hermetisch abgedichtete Kompressoren wird als Spaltrohrmotor ausgeführt. Das Spaltrohr dient der Abdichtung zwischen Ständer- und Läuferkühlraum. Während der Läufer vom Prozessgas gekühlt wird, wird der Ständer von Öl durchströmt. Diese Ausführungsvariante hat sich als technologisch aufwändig erwiesen, und die möglichen Hauptabmessungen werden durch die Festigkeitsgrenzen des Spaltrohres bestimmt. Bei Asynchronmaschinen muss unter Umständen der Luftspalt erweitert werden, was wiederum aufgrund des Wirkprinzips dieses Maschinentyps zu einem geringeren Leistungsfaktor und folglich zu einem größeren Stromrichter führt.

Bei einer zweiten Variante von Motoren werden der Läufer und der Ständer vom Prozessgas durch- bzw. überströmt. Die bekannten Motoren, die mit Gas unter hohem statischem Druck gekühlt werden, sind mit harzgetränkten Folien und Bändern isoliert, wobei die Materialien möglichst wenig empfindlich gegenüber dem Prozessgas sind. Die Technologie zur Herstellung eines solchen Isoliersystems ist an die traditionelle Technologie der Wicklungsisolierung und -tränkung im Bereich großer elektrischer Maschinen angelehnt und erfordert lediglich einige Anpassungen aufgrund der verwendeten Materialien. Das Kunstharz, welches üblicherweise in einem Vakuum-Imprägnierverfahren eingebracht wird, übernimmt Aufgaben der Isolierung, Verklebung und Versteifung der Wicklung.

Problematisch ist die Anfälligkeit gegen Feuchtigkeitsaufnahme, insbesondere nach Delamination der Hauptisolierung. Delamination kann durch Druckwechselbeanspruchung im Prozess hervorgerufen werden. Die Entstehung eines einzigen leitfähigen Kanals zwischen einem Wicklungsstrang zum Erdpotenzial oder zu einem anderen Strang führt bereits zum Komplettausfall der Maschine.

Aus der US 2010/0264761 A1 ist eine Maschine mit einem Gaskompressor und einer rotierenden, elektrischen Maschine zum Antrieb des Gaskompressors bekannt, wobei die elektrische Maschine einen ersten und einem zweiten elektrischen Isolator mit Polyetheretherketon (PEEK) aufweist.

Aus der EP 1 863 152 A2 ist eine Statoranordnung für eine elektrische Maschine bekannt, welche zum Transport von Fluiden, bspw. Öl oder Gas, durch Pipelines eingesetzt wird.

Aus der EP 1 967 286 B1 ist eine eingekapselte Statoranordnung bekannt, welche bspw. für Kompressoren in der Öl- und Gasindustrie eingesetzt werden kann.

Aus der EP 2 267 869 B1 ist eine elektrische Maschine mit einer Dichtungsanordnung zum Einsatz in korrosiven Umgebungsbedingungen bekannt.

Aus der DE 10 2009 003 424 A1 ist ein Elektroantrieb mit einem Druckgehäuse für Gaspipeline- und Speicherkompressionsanwendungen bekannt.

Eine Aufgabe der Erfindung ist es, Nachteile aus dem Stand der Technik zu überwinden und ein fluidgekühltes Aktivteil bereitzustellen, welches leistungsstark, kompakt und insbesondere beständig im Umfeld des Fluides bzw. eines Prozessfluides ist. Eine weitere Aufgabe der Erfindung ist es, eine elektrische Maschine bzw. ein Antriebssystem mit einem derartigen Aktivteil bereitzustellen.

Eine Lösung der Aufgabe ergibt sich für ein Aktivteil der eingangs genannten Art durch einen jeweiligen Kühlkanal zur Führung des Fluides, insbesondere eines Prozessfluides, wobei der jeweilige Kühlkanal zwischen der jeweiligen Hauptisolierung und der jeweiligen Teilleiterisolierung angeordnet ist.

Eine Lösung der weiteren Aufgabe ergibt sich für eine elektrische Maschine bzw. ein Antriebssystem der eingangs genannten Art dadurch, dass die elektrische Maschine bzw. das Antriebssystem ein derartiges, als Stator ausgestaltetes fluidgekühltes Aktivteil und/oder ein derartiges, als drehbar gelagerten Rotor ausgestaltetes, fluidgekühltes Aktivteil bzw. eine derartige elektrische Maschine aufweist.

Das vorgeschlagene, fluidgekühlte Aktivteil ist insbesondere zylinderförmig bei einer Ausgestaltung als Rotor und hohlzylinderförmig bei einer Ausgestaltung als Stator für eine elektrische Maschine ausgebildet. Entsprechend sind eine axiale Richtung entlang einer Maschinenachse und eine radiale Richtung von der Maschinenachse nach außen vorgegeben. Ein entsprechendes Zylinder-Koordinatensystem wird durch eine Umfangsrichtung senkrecht zur radialen Richtung und um die Maschinenachse herum vervollständigt.

Das Aktivteil weist axial verlaufende Nuten auf, welche bei der Ausgestaltung als Rotor bzw. Stator für einen Innenläufer an der radialen Außenseite bzw. Innenseite des Aktivteils, insbesondere als offene Nuten, angeordnet sind. Insbesondere können die Nuten in ein Blechpaket oder dergleichen des Aktivteils eingebracht sein. In der jeweiligen Nut ist zumindest ein elektrischer Leiter angeordnet, der jeweils über einen Wickelkopfbereich an der jeweiligen axialen Stirnseite des Aktivteils aus der einen Nut herausgeführt wird und in die nächste Nut eingeführt wird.

Der jeweilige Leiter unterteilt sich dabei in eine Mehrzahl von Teilleitern, wobei eine jeweilige Teilleiterisolierung für die einzelnen Teilleiter und eine Hauptisolierung zur Isolierung des jeweiligen Leiters gegenüber der jeweiligen Nut bzw. gegenüber dem Blechpaket vorgesehen sind. Vorzugsweise wird für die jeweilige Hauptisolierung und/oder die jeweilige Teilleiterisolierung ein sogenannter Hochleistungskunststoff, wie zum Beispiel Polyetheretherketon (PEEK), verwendet.

Polyetheretherketon hat dabei eine Reihe von Vorteilen, wie zum Beispiel eine besondere chemische und Temperaturbeständigkeit. Diese macht sich bspw. dadurch bemerkbar, dass das Material dauerhaft bis zu einer Temperatur von 250 °C eingesetzt werden kann und weiterhin eine hohe Widerstandsfähigkeit gegenüber chemisch aggressiven Substanzen, insbesondere wässrigen Säuren, aufweist. Somit eignet sich PEEK besonders für Anwendungen mit Sauergas, wie zum Beispiel unbehandeltes Erdgas, oder mit sauren Flüssigkeiten, wie unbehandeltes Erdöl. Neben seiner Hydrolysebeständigkeit und seiner guten mechanischen Kriechbeständigkeit macht seine elektrische Durchschlagsfestigkeit von 25 kV/mm das Material besonders geeignet für den Einsatz bei dem vorgeschlagenen elektrischen Aktivteil bzw. der vorgeschlagenen elektrischen Maschine, das bzw. die mit einer elektrischen Spannung von einigen kV bzw. einigen 10 kV betreibbar ist.

Das vorgeschlagene Aktivteil zeichnet sich unter anderem durch den jeweiligen Kühlkanal aus, der jeweils zwischen der jeweiligen Hauptisolierung und der jeweiligen Teilleiterisolierung angeordnet ist und mittels welchem das Fluid, insbesondere ein Prozessfluid, innerhalb des Aktivteils geführt wird. Wie schon angedeutet, kann das Fluid flüssig oder gasförmig vorliegen und insbesondere eine Prozessflüssigkeit, wie zum Beispiel Erdöl, oder ein Prozessgas, wie zum Beispiel Erdgas, sein. Indem das Fluid in dem jeweiligen Kühlkanal zwischen der jeweiligen Hauptisolierung und der jeweiligen Teilleiterisolierung geführt wird, wird eine besonders direkte Kühlung des jeweiligen Leiters realisiert. Somit kann die während des Betriebs des Aktivteils entstehende Verlustwärme praktisch direkt am Ort ihrer Entstehung abtransportiert werden, wobei für den Wärmetransport hinderliche, thermische Isolierstrecken möglichst gering gehalten werden.

Dank geeigneter Isoliermaterialien, wie zum Beispiel dem oben erläuterten Hochleistungskunststoff, kann dabei eine elektrische Isolierung der jeweiligen Teilleiter und des jeweiligen Leiters auch unter widrigen Umgebungsbedingungen, wie zum Beispiel bei der Umströmung mit dem Prozessfluid, gewährleistet werden. Durch die erwähnte, sehr direkte Kühlung des jeweiligen Leiters kann trotz des zusätzlichen Platzbedarfs für Kühlkanäle in der jeweiligen Nut eine hohe Leistungsdichte der Maschine erreicht werden. Somit erlaubt die vorliegende Erfindung insbesondere dank der vorgeschlagenen Führung des jeweiligen Kühlkanals, ein leistungsstarkes und kompaktes Aktivteil zu schaffen.

Vorzugsweise ist auch das vorgeschlagene Aktivteil mit einer elektrischen Spannung im Bereich von zumindest einigen kV, vorzugsweise einigen 10 kV, betreibbar. Insbesondere kann das vorgeschlagene Aktivteil bzw. die vorgeschlagene elektrische Maschine bzw. das vorgeschlagene Antriebssystem mit einer elektrischen Leistung von einigen MW bis einigen 10 MW betrieben werden. Vorzugsweise ist die elektrische Maschine als Elektromotor ausgestaltet, wobei prinzipiell auch eine Ausgestaltung als Generator denkbar ist.

Die Fluidenergiemaschine kann insbesondere als thermische bzw. hydraulische Strömungs- oder Kolbenmaschine ausgestaltet sein. Als thermische bzw. hydraulische Strömungsmaschine kommen zum Beispiel Turboverdichter für Gase bzw. Turbo- oder Kreiselpumpen für Flüssigkeiten, in Betracht. Und als thermische bzw. hydraulische Kolbenmaschine können bspw. Kolbenverdichter für Gase bzw. Kolbenpumpen für Flüssigkeiten zum Einsatz kommen. Vorzugsweise wird das Prozessfluid der Fluidenergiemaschine als das Fluid zur Kühlung des vorgeschlagenen Aktivteils bzw. der vorgeschlagenen elektrischen Maschine verwendet. Das Prozessfluid kann dabei gasförmig, insbesondere als Erdgas, oder flüssig, insbesondere als Erdöl, vorliegen, wobei die Fluidenergiemaschine entsprechend ausgestaltet ist, wie oben erläutert.

Bei einer vorteilhaften Ausgestaltung der Erfindung weist der jeweilige Kühlkanal einen Einlasskanal, einen Auslasskanal sowie einen jeweiligen Verbindungskanal zur strömungstechnischen Verbindung des Einlasskanals mit dem Auslasskanal auf, wobei die jeweilige Nut einen Nutgrund und zwei Nutwände aufweist, wobei der jeweilige Einlasskanal bzw. Auslasskanal zwischen dem jeweiligen Leiter einerseits und dem Nutgrund bzw. der dem Nutgrund in radialer Richtung gegenüberliegenden Nutöffnung andererseits angeordnet ist, wobei der jeweilige Verbindungskanal zumindest überwiegend zwischen dem jeweiligen Leiter einerseits und einer der beiden Nutwände andererseits angeordnet ist.

Durch eine derartige Ausgestaltung des jeweiligen Kühlkanals wird gewährleistet, dass das Fluid an den in Umfangsrichtung betrachtet seitlichen Oberflächen des jeweiligen Leiters entlang strömen kann und einen guten Abtransport der während des Betriebs im jeweiligen Leiter entstehenden Verlustwärme bewirkt. Dazu sind jeweils ein Einlasskanal zwischen dem jeweiligen Leiter und dem Nutgrund sowie ein Auslasskanal zwischen dem jeweiligen Leiter und der Nutöffnung vorgesehen, wobei der Verbindungskanal eine Verbindung zwischen dem Einlasskanal und dem Auslasskanal herstellt. Vorzugsweise sind der jeweilige Einlasskanal und der jeweilige Auslasskanal in axialer Richtung weitestgehend durchgehend entlang der jeweiligen Nut ausgestaltet.

Der jeweilige Verbindungskanal sorgt insbesondere dafür, dass das Fluid vorwiegend in radialer Richtung vom jeweiligen Einlasskanal zum jeweiligen Auslasskanal strömt. Dabei kann auch eine Strömungskomponente entlang der axialen Richtung vorgesehen sein kann, vor allem wenn zwischen dem jeweiligen Einlass und dem jeweiligen Auslass ein axialer Versatz vorliegt. Ein solcher Versatz kommt bspw. dadurch zustande, dass der jeweilige Einlass an einer der Stirnseiten der jeweiligen Nut angeordnet ist und der jeweilige Auslass an der gegenüberliegenden Stirnseite oder bspw. im Bereich der axialen Mitte der jeweiligen Nut angeordnet ist.

Für die Ausbildung des jeweiligen Kühlkanals kann bspw. eine Art Abstandshalter oder sonstige Tragestruktur vorgesehen sein.

Bei einer weiteren vorteilhaften Ausgestaltung der Erfindung weist die jeweilige Hauptisolierung zwei im Wesentlichen C-förmige Isolier-Halbschalen auf, welche zusammen den jeweiligen Leiter in einer Ebene senkrecht zur axialen Richtung im Wesentlichen umschließen, wobei die beiden jeweiligen Isolier-Halbschalen im Wesentlichen symmetrisch zur Nutmitte in Umfangsrichtung der jeweiligen Nut angeordnet sind, wobei die beiden jeweiligen Isolier-Halbschalen mittels eines jeweiligen Dichtelementes, aufweisend insbesondere einen Fluorkautschuk, in radialer Richtung abgedichtet sind.

Bei einem Querschnitt senkrecht zur axialen Richtung durch das Aktivteil wird der jeweilige Leiter somit von den beiden Isolier-Halbschalen eingefasst. Die jeweilige Isolier-Halbschale weist in dieser Ebene dabei einen im Wesentlichen C-förmigen Querschnitt auf, wobei die beiden Isolier-Halbschalen einander zugewandt und im Wesentlichen symmetrisch zur Nutmitte angeordnet sind. Somit ergeben sich radial innen und radial außen zwei Auflage- bzw. Berührungslinien für die beiden Isolier-Halbschalen, wobei an diesen in axialer Richtung verlaufenden Linien ein jeweiliges Dichtelement zur Abdichtung der jeweiligen Hauptisolierung in radialer Richtung vorgesehen ist.

Um die Abdichtung der beiden Isolier-Halbschalen in radialer Richtung zu vereinfachen und zuverlässiger zu gestalten, kann die jeweilige Isolier-Halbschale im Bereich der Auflage- bzw. Berührungslinien jeweils eine Art Haken aufweisen, der in radialer Richtung zum jeweiligen Leiter weist. Dadurch wird jeweils eine vergrößerte Auflage- bzw. Berührungsfläche ausgebildet.

Als Dichtmaterial für das jeweilige Dichtelement kommt hierbei insbesondere ein Fluorkautschuk zum Einsatz, der sich durch seine chemische Beständigkeit auch bei widrigen Umgebungsbedingungen und gute elektrische Isoliereigenschaften auszeichnet. Der Fluorkautschuk (FKM) kann bspw. auch in Form eines Perfluorkautschuks (FFKM) vorliegen.

Bei einer alternativen, vorteilhaften Ausgestaltung der Erfindung bedeckt die jeweilige Hauptisolierung zumindest größtenteils den Nutgrund und die zwei Nutwände der jeweiligen Nut, wobei eine Mehrzahl von Kanal-Halbschalen in axialer Richtung hintereinander angeordnet ist, wobei die jeweilige Kanal-Halbschale in einer Ebene senkrecht zur axialen Richtung einen im Wesentlichen U-förmigen Querschnitt aufweist und den jeweiligen Leiter in dieser Ebene größtenteils umschließt.

Die jeweilige Hauptisolierung kleidet somit die jeweilige Nut aus und gewährleistet eine zuverlässige Potenzialtrennung zwischen dem jeweiligen Leiter und bspw. dem Blechpaket des Aktivteils. Der jeweilige Leiter wird insbesondere durch die Kanal-Halbschalen innerhalb der jeweiligen Nut positioniert, wobei die jeweilige Kanal-Halbschalen in einem Querschnitt senkrecht zur axialen Richtung einen im Wesentlichen U-förmigen Querschnitt aufweist. Dabei ist die jeweilige Kanal-Halbschale derart angeordnet, dass sie den jeweiligen Leiter in diesem Querschnitt betrachtet größtenteils umschließt, so dass das jeweilige U der jeweiligen Kanal-Halbschale in die eine oder die andere Umfangsrichtung weist.

Bspw. sind einige der Kanal-Halbschalen zu anderen der Kanal-Halbschalen spiegelverkehrt in Bezug auf die Nutmitte in Umfangsrichtung der jeweiligen Nut angeordnet. Diesem Bespiel entsprechend, sind die Kanal-Halbschalen dabei derart angeordnet, dass einige in die eine Umfangsrichtung und einige in die andere, entgegengesetzte Umfangsrichtung weisen. Insbesondere wird durch die Kanal-Halbschalen neben der Positionierung und der elektrischen Isolierung des jeweiligen Leiters auch die Führung des Fluides gewährleistet.

Bei einer weiteren vorteilhaften Ausgestaltung der Erfindung weist die jeweilige Kanal-Halbschale dabei in einer Ebene senkrecht zur axialen Richtung betrachtet zumindest einen Radialsteg, welcher sich jeweils in radialer Richtung am jeweiligen Leiter entlang erstreckt, sowie zwei Paare von in Umfangsrichtung weisenden Umfangsstegen auf, die mittels des Radialsteges verbunden sind, wobei das eine Paar Umfangsstege zur Ausbildung des jeweiligen Einlasskanals und das andere Paar Umfangsstege zur Ausbildung des jeweiligen Auslasskanals ausgestaltet ist, wobei bei zumindest einer ersten Kanal-Halbschale jeweils zumindest einer der beiden mittleren Umfangsstege zur Ausbildung zumindest eines Teils des jeweiligen Verbindungskanals ausgestaltet ist.

Der Querschnitt der jeweiligen Kanal-Halbschale senkrecht zur axialen Richtung kann bspw. anhand des Buchstabens "E" gut veranschaulicht werden, welcher aus einem senkrechten und drei waagrechten Strichen besteht. Dabei entspricht der Radialsteg bzw. ein Umfangssteg der jeweiligen Kanal-Halbschale dem senkrechten Strich bzw. einem waagrechten Strich des "E". Im Unterschied zum Buchstaben "E" weist die jeweilige Kanal-Halbschale jedoch zwei Paare von Umfangsstegen und somit vier Umfangsstege anstelle von lediglich drei waagrechten Strichen beim Buchstaben "E" auf.

Die jeweilige Kanal-Halbschale ist dabei derart ausgestaltet, dass das bspw. radial innere bzw. radial äußere Paar Umfangsstege zusammen mit dem Radialsteg den jeweiligen Einlasskanal bzw. Auslasskanal größtenteils einfasst. Vorzugsweise ist der jeweilige Leiter dabei zwischen den beiden mittleren der Umfangsstege angeordnet. Der jeweilige Radialsteg erstreckt sich in radialer Richtung am jeweiligen Leiter entlang und ist vorteilhafterweise zwischen dem jeweiligen Leiter einerseits und einer der beiden entsprechenden Nutwände angeordnet.

Die Kanal-Halbschalen umfassen dabei zumindest eine erste Kanal-Halbschale, mittels welcher zumindest ein Teil des jeweiligen Verbindungskanal ausgestaltet wird. Insbesondere gewährleistet die jeweilige erste Kanal-Halbschale einen ausreichenden Hohlraum zwischen dem jeweiligen Leiter einerseits und der entsprechenden Nutwand andererseits für den jeweiligen Verbindungskanal. Bspw. ist der jeweilige Hohlraum in Bezug auf die jeweilige Nutmitte in Umfangsrichtung dem jeweiligen Radialsteg gegenüber liegend angeordnet. Insbesondere kann die jeweilige erste Kanal-Halbschale eine Verbindung des jeweiligen Einlasskanals und/oder des jeweiligen Auslasskanal zum jeweiligen Verbindungskanal schaffen.

Bei einer weiteren vorteilhaften Ausgestaltung der Erfindung verbleibt dabei zwischen zumindest einem der beiden mittleren Umfangsstege der jeweiligen ersten Kanal-Halbschale einerseits und der jeweiligen Hauptisolierung andererseits eine jeweilige Durchgangsöffnung und/oder weist zumindest einer der beiden mittleren Umfangsstege der jeweiligen ersten Kanal-Halbschale eine jeweilige Durchgangsöffnung auf.

Die jeweilige Durchgangsöffnung stellt somit einen Teil des jeweiligen Verbindungskanal dar, mittels welchem das Fluid vom jeweiligen Einlasskanal in den Bereich seitlich des jeweiligen Leiters strömen kann und/oder das Fluid vom Bereich seitlich des jeweiligen Leiters in den jeweiligen Auslasskanal strömen kann. Der Bereich seitlich des jeweiligen Leiters ist dabei in Umfangsrichtung an den jeweiligen Leiter angrenzend angeordnet.

Die jeweilige Durchgangsöffnung ist an einem oder beiden der beiden mittleren Umfangsstege der jeweiligen ersten Kanal-Halbschale angeordnet oder verbleibt zwischen einem dieser Umfangsstege einerseits und der jeweiligen Hauptisolierung andererseits.

Bei einer weiteren vorteilhaften Ausgestaltung der Erfindung sind bei zumindest einer zweiten Kanal-Halbschale jeweils die Umfangsstege zumindest eines der zwei Paare von Umfangsstegen derart mittels eines jeweiligen Endsteges verbunden, dass die jeweilige zweite Kanal-Halbschale in einer Ebene senkrecht zur axialen Richtung betrachtet einen rechteckigen Querschnitt zur Führung des jeweiligen Kühlkanals aufweist.

Vorzugsweise ist der jeweilige Endsteg in Bezug auf die jeweilige Nutmitte in Umfangsrichtung dem jeweiligen Radialsteg gegenüber liegend angeordnet. Der jeweilige Endsteg erlaubt einerseits eine gute Führung des strömenden Fluides und andererseits eine erhöhte mechanische Stabilität, indem insbesondere der jeweilige Leiter zusätzlich in radialer Richtung gestützt wird.

Bei einer weiteren vorteilhaften Ausgestaltung der Erfindung sind in der jeweiligen Nut zumindest zwei elektrische Leiter in radialer Richtung übereinander angeordnet, wobei ein jeweiliges Zwischenelement zur Abdichtung und/oder zum Toleranzausgleich vorgesehen ist, welches in radialer Richtung zwischen einer der Halbschalen des oberen elektrischen Leiters einerseits und einer der Halbschalen des unteren elektrischen Leiters andererseits angeordnet ist.

Sind in der jeweiligen Nut zwei als Stabwicklung ausgeführte elektrische Leiter angeordnet, wird oftmals jener elektrische Leiter als Oberstab bzw. Unterstab zeichnet, welcher näher an der Nutöffnung bzw. am Nutgrund angeordnet ist. Denkbar ist allerdings auch die Anordnung von mehr als zwei elektrischen Leitern in der jeweiligen Nut.

Jedem der Leiter in der Nut sind Kanal-Halbschalen zugeordnet, welche den jeweiligen Leiter in einem Querschnitt senkrecht zur axialen Richtung betrachtet paarweise größtenteils umschließen. Dabei ist zwischen den Halbschalen benachbarter Leiter ein jeweiliges Zwischenelement vorgesehen, welches der Abdichtung und/oder dem Toleranzausgleich dient. Eine Abdichtung ist dabei vorteilhaft, um unerwünschte Strömungsverluste zwischen dem Einlasskanal und dem Auslasskanal von benachbarten Leitern zu vermeiden. Ein Toleranzausgleich bietet den Vorteil, dass Fertigungstoleranzen grob gehalten werden können, was Kosten einspart. Weiterhin kann die komplette, in der jeweiligen Nut befindliche Anordnung in radialer Richtung, bspw. mittels eines Nutverschlusses an der jeweiligen Nutöffnung, eingespannt werden und somit insbesondere ein Wackeln dieser Anordnung sicher verhindert werden.

Für das jeweilige Zwischenelement kann insbesondere ein Fluorkautschuk zum Einsatz kommen, der sich wie oben schon erläutert durch seine chemische Beständigkeit auch bei widrigen Umgebungsbedingungen und gute elektrische Isoliereigenschaften auszeichnet. Der Fluorkautschuk (FKM) kann bspw. auch in Form eines Perfluorkautschuks (FFKM) vorliegen.

Bei einer alternativen, vorteilhaften Ausgestaltung der Erfindung bedeckt die jeweilige Hauptisolierung den Nutgrund und die zwei Nutwände der jeweiligen Nut zumindest größtenteils, wobei in der jeweiligen Nut zumindest zwei elektrische Leiter in radialer Richtung übereinander angeordnet sind, wobei eine jeweilige Leiter-Schale vorgesehen ist, welche den jeweiligen Leiter in einer Ebene senkrecht zur axialen Richtung umschließt, wobei sich sowohl die jeweilige Nut zumindest im Bereich des unteren elektrischen Leiters als auch die jeweilige Leiter-Schale des unteren Leiters derart zum Nutgrund hin verjüngen, dass die jeweilige Leiter-Schale des unteren Leiters formschlüssig zum Nutgrund hin fixiert ist und zwischen dem Nutgrund und der jeweiligen Leiter-Schale des unteren Leiters ein erster, axial verlaufender Hohlraum, insbesondere für einen ersten Einlasskanal, verbleibt.

Die jeweilige Hauptisolierung kleidet somit die jeweilige Nut aus und gewährleistet eine zuverlässige Potenzialtrennung zwischen dem jeweiligen elektrischen Leiter und bspw. dem Blechpaket des Aktivteils. Der jeweilige elektrische Leiter wird insbesondere durch die jeweilige Leiter-Schale innerhalb der jeweiligen Nut positioniert, wobei die jeweilige LeiterSchale den jeweiligen Leiter im Querschnitt senkrecht zur axialen Richtung betrachtet größtenteils umschließt.

Sind in der jeweiligen Nut bspw. zwei elektrische Leiter übereinander angeordnet, werden diese oftmals als Oberstab bzw. Unterstab bezeichnet, wenn sie als Stabwicklung ausgeführt sind. Dabei ist der Oberstab bzw. Unterstab jener elektrische Leiter, welcher näher an der Nutöffnung bzw. am Nutgrund angeordnet ist.

Eine besonders gute Fixierung des unteren Leiters in der jeweiligen Nut wird insbesondere durch die folgende Anordnung erreicht. Prinzipiell kann die jeweilige Nut von radial innen nach radial außen eine konstante Nutbreite in Umfangsrichtung aufweisen. Allerdings ist zumindest im Bereich des unteren Leiters eine Verjüngung der jeweiligen Nut zum Nutgrund hin vorgesehen, wobei auch die jeweilige Leiter-Schale des unteren Leiters eine entsprechende Verjüngung zum Nutgrund hin aufweist. Die entsprechenden Verjüngungen sind dabei derart ausgestaltet, dass die jeweilige Leiter-Schale des unteren Leiters formschlüssig zum Nutgrund hin in der jeweiligen Nut fixiert ist und der erste Hohlraum zwischen dem Nutgrund und der jeweiligen Leiter-Schale verbleibt. Somit wird zum einen der erste Hohlraum, insbesondere für den ersten Einlasskanal, bereitgestellt und zum anderen eine mechanisch stabile Positionierung des jeweiligen unteren Leiters in der jeweiligen Nut sichergestellt.

Insbesondere kann die jeweilige Leiter-Schale zweiteilig ausgestaltet sein, indem sie ein erstes Leiter-Schalenteil, welches im Wesentlichen einen U-förmigen Querschnitt in einer Ebene senkrecht zur axialen Richtung aufweist, sowie ein zweites Leiter-Schalenteil umfasst. Das zweite Leiter-Schalenteil ist dabei als eine Art Deckel für das erste Leiter-Schalenteil ausgestaltet, so dass der jeweilige, in der Leiter-Schale angeordnete Leiter durch die beiden Leiter-Schalenteile senkrecht zur axialen Richtung betrachtet umschlossen wird. Ein besonders gutes Umschließen des jeweiligen Leiters wird insbesondere dadurch erreicht, dass das zweite Leiter-Schalenteil zwei Nuten und das erste Leiter-Schalenteil zwei entsprechende Federn für eine jeweilige Nut-Feder-Verbindung aufweisen. Zur Abdichtung und somit zum Schutz des jeweiligen Leiters vor dem, in dem jeweiligen Hohlraum strömenden Fluid kann im Bereich der Nut-Feder-Verbindung insbesondere ein Fluorkautschuk aufgrund seiner oben erläuterten, vorteilhaften Eigenschaften eingesetzt werden. Weiterhin kann mit diesem Material aufgrund seiner Elastizität eine Vorspannung der jeweiligen Leiter-Schale in Umfangsrichtung erreicht werden, was die Fixierung des jeweiligen Leiters in der jeweiligen Nut weiter verbessert.

Bei einer weiteren vorteilhaften Ausgestaltung der Erfindung ist dabei zumindest ein erstes Einlegeteil vorgesehen, welches jeweils in einer Ebene senkrecht zur axialen Richtung einen H-förmigen Querschnitt aufweist, wobei das jeweilige, erste Einlegeteil zwischen der jeweiligen Leiter-Schale des unteren elektrischen Leiters einerseits und der jeweiligen Leiter-Schale des oberen elektrischen Leiters andererseits angeordnet ist und derart ausgestaltet ist, dass zwischen der jeweiligen Leiter-Schale des unteren Leiters bzw. des oberen Leiters einerseits und dem jeweiligen, ersten Einlegeteil andererseits ein zweiter bzw. dritter, axial verlaufender Hohlraum, insbesondere für einen ersten Auslasskanal bzw. einen zweiten Einlasskanal, verbleibt.

Das jeweilige erste Einlegeteil erlaubt eine mechanisch stabile Positionierung des jeweiligen oberen Leiters in der jeweiligen Nut und stellt gleichzeitig den zweiten und dritten Hohlraum, insbesondere für den ersten Auslasskanal und dem zweiten Einlasskanal, bereit. Hierzu ist das jeweilige erste Einlegeteil in einem Querschnitt senkrecht zur axialen Richtung H-förmig ausgestaltet, wobei das jeweilige erste Einlegeteil als eine Art Abstandshalter zwischen den beiden benachbarten Leitern dient und den zweiten und dritten Hohlraum dabei schafft.

Bei einer weiteren vorteilhaften Ausgestaltung der Erfindung weist das jeweilige, erste Einlegeteil dabei in einer Ebene senkrecht zur axialen Richtung zwei Außenstege auf, die zur Nutöffnung hin weisen und zumindest abschnittsweise in Umfangsrichtung zwischen der jeweiligen Leiter-Schale des oberen Leiters einerseits und der jeweiligen Nutwand andererseits angeordnet sind, wobei sich die beiden Außenstege zur Nutöffnung hin und die jeweilige Leiter-Schale des oberen Leiters abschnittsweise zum Nutgrund hin derart verjüngen, dass die jeweilige Leiter-Schale des oberen Leiters kraftschlüssig in radialer Richtung fixiert ist.

Der jeweilige, zur jeweiligen Nutöffnung hin weisende Außensteg des H-förmigen, ersten Einlegeteils ist somit zwischen der jeweiligen Leiter-Schale des oberen Leiters und der Nutwand angeordnet, wobei sich die beiden Außenstege zur Nutöffnung hin verjüngen. Eine kraftschlüssige Fixierung der jeweiligen Leiter-Schale des oberen Leiters in radialer Richtung wird insbesondere bei einer konstanten Nutbreite im Bereich des oberen Leiters dadurch erreicht, dass sich die jeweilige Leiter-Schale des oberen Leiters abschnittsweise zum Nutgrund hin verjüngt. Somit kann zunächst das jeweilige erste Einlegeteil in die jeweilige Nut eingebracht werden und anschließend die jeweilige Leiter-Schale des oberen Leiters in die jeweilige Nut eingebracht werden, indem diese Leiter-Schale zwischen die beiden Außenstege des jeweiligen, ersten Einlegeteils zum Nutgrund hin gepresst wird. Dadurch wird insgesamt eine zuverlässige Positionierung des jeweiligen oberen Leiters erreicht und gleichzeitig der dritte Hohlraum, insbesondere für den zweiten Einlasskanal gebildet.

Bei einer weiteren vorteilhaften Ausgestaltung der Erfindung ist zumindest ein zweites Einlegeteil vorgesehen, welches jeweils in einer Ebene senkrecht zur axialen Richtung einen U-förmigen Querschnitt aufweist, wobei das jeweilige, zweite Einlegeteil derart angeordnet und ausgestaltet ist, dass zwischen der jeweiligen Leiter-Schale des oberen Leiters einerseits und dem jeweiligen, zweiten Einlegeteil andererseits ein vierter, axial verlaufender Hohlraum, insbesondere für einen zweiten Auslasskanal, verbleibt.

Vorzugsweise wird das jeweilige, zweite Einlegeteil derart angeordnet, dass sein U-förmiger Querschnitt senkrecht zur axialen Richtung betrachtet zum Nutgrund weist. Prinzipiell ist auch eine Anordnung des jeweiligen, zweiten Einlegeteils denkbar, bei welcher sein U-förmiger Querschnitt senkrecht zur axialen Richtung betrachtet in eine der Umfangsrichtungen oder zur Nutöffnung weist. Dabei verbleibt zwischen dem jeweiligen, zweiten Einlegeteil und der jeweiligen Leiter-Schale des oberen Leiters der vierte Hohlraum, welcher insbesondere für den zweiten Auslasskanal vorgesehen ist. Weist der U-förmige Querschnitt zur Nutöffnung hin, ist insbesondere ein Schließen des vierten Hohlraums durch einen entsprechenden Nutverschluss erreichbar.

Bei einer weiteren vorteilhaften Ausgestaltung der Erfindung weist das jeweilige, zweite Einlegeteil in einer Ebene senkrecht zur axialen Richtung zwei Innenstege auf, die zum Nutgrund hin weisen und zumindest abschnittsweise in Umfangsrichtung zwischen der jeweiligen Leiter-Schale des oberen Leiters einerseits und der jeweiligen Nutwand andererseits angeordnet sind, wobei sich die beiden Innenstege zum Nutgrund hin und die jeweilige Leiter-Schale des oberen Leiters abschnittsweise zur Nutöffnung hin derart verjüngen, dass die jeweilige Leiter-Schale des oberen Leiters und das jeweilige zweite Einlegeteil kraftschlüssig in radialer Richtung fixiert sind.

Der jeweilige, zum jeweiligen Nutgrund hin weisende Innensteg des U-förmigen, zweiten Einlegeteils ist somit zwischen der jeweiligen Leiter-Schale des oberen Leiters und der Nutwand angeordnet, wobei sich die beiden Innenstege zum Nutgrund hin verjüngen. Eine kraftschlüssige Fixierung der jeweiligen Leiter-Schale des oberen Leiters in radialer Richtung wird insbesondere bei einer entspannten Nutbreite im Bereich des oberen Leiters dadurch erreicht bzw. verstärkt, dass sich die jeweilige Leiter-Schale des oberen Leiters abschnittsweise zur Nutöffnung hin verjüngt. Somit kann zunächst die jeweilige Leiter-Schale des oberen Leiters in die jeweilige Nut eingebracht werden und anschließend das jeweilige zweite Einlegeteil in die jeweilige Nut eingebracht werden, indem der jeweilige Innensteg des zweiten Einlegeteil in den Zwischenraum zwischen der Leiter-Schale des oberen Leiters und der Nutwand eingeführt wird und das zweite Einlegeteil zum Nutgrund hin gepresst wird. Dadurch wird insgesamt eine zuverlässige Positionierung des jeweiligen oberen Leiters und des jeweiligen zweiten Einlegeteil erreicht und gleichzeitig der vierte Hohlraum, insbesondere für den zweiten Auslasskanal gebildet.

Bei einer weiteren vorteilhaften Ausgestaltung der Erfindung sind in axialer Richtung zwei jeweilige Einlegeteile hintereinander angeordnet, wobei im Bereich der axialen Mitte zwischen den beiden jeweiligen Einlegeteilen eine jeweilige axiale Lücke verbleibt, wobei der erste Hohlraum und der dritte Hohlraum im Bereich der axialen Mitte mittels eines jeweiligen Deckels geschlossen sind, wobei der zweite Hohlraum und der vierte Hohlraum an der jeweiligen axialen Stirnseite mittels eines jeweiligen Deckels geschlossen sind.

Durch eine derartige Ausgestaltung des Aktivteils wird das Fluid im Aktivteil an seinen beiden Stirnseiten zugeführt und im Bereich seiner axialen Mitte wieder aus dem Aktivteil herausgeführt. Dabei dienen der erste und der dritte Hohlraum als Einlasskanal bzw. der zweite und der dritte Hohlraum als Auslasskanal für den unteren und den oberen Leiter. Um unerwünschte Strömungsverluste zu vermeiden, sind jeweilige Deckel vorgesehen, welche den ersten und den dritten Hohlraum im Bereich der axialen Mitte und den zweiten und den vierten Hohlraum an der jeweiligen axialen Stirnseite schließen.

Bei einer weiteren vorteilhaften Ausgestaltung der Erfindung weist die jeweilige Leiter-Schale in radialer Richtung verlaufende Aussparungen zur Ausbildung des jeweiligen Verbindungskanals auf.

Vorzugsweise verläuft die jeweilige Aussparung größtenteils oder komplett an der Seitenfläche des jeweiligen Leiters entlang, wobei sich die Seitenfläche in radialer Richtung und in axialer Richtung erstreckt. Die Aussparungen sorgen somit für eine Umströmung des jeweiligen Leiters mit dem Fluid, so dass eine gute Kühlung des jeweiligen Leiters gewährleistet werden kann.

Um die Gefahr möglicher elektrischer Durchschläge im Bereich der Wickelköpfe an der jeweiligen axialen Stirnseite des Aktivteils zu minimieren, kann es vorteilhaft sein, keine derartige Aussparungen in der jeweiligen Leiter-Schale in unmittelbarer Nachbarschaft der jeweiligen axialen Stirnseite vorzusehen. Je nach Größe des Aktivteils, der anliegenden elektrischen Spannung und den Isoliereigenschaften der Hauptisolierung und der Teilleiterisolierung kann es angebracht sein, ausgehend von der jeweiligen axialen Stirnseite einige Zentimeter bis einige 10 cm keine der oben erläuterten Aussparungen vorzusehen. Ähnlich kann es auch im Bereich der erläuterten Lücke vorteilhaft sein, keine derartigen Aussparungen in der jeweiligen Leiter-Schale in unmittelbarer Nachbarschaft der Lücke vorzusehen.

Bei einer weiteren vorteilhaften Ausgestaltung der Erfindung ist die jeweilige Nut in radialer Richtung im Bereich der Nutöffnung mittels eines Nutverschluss-Elementes verschlossen, wobei zwischen dem jeweiligen Nutverschluss-Element und dem zumindest einen Leiter ein Toleranzausgleichs-Element angeordnet ist.

Für das jeweilige Toleranzausgleichs-Element kann insbesondere ein Fluorkautschuk zum Einsatz kommen, der sich wie oben schon erläutert durch seine chemische Beständigkeit auch bei widrigen Umgebungsbedingungen und gute elektrische Isoliereigenschaften auszeichnet. Der Fluorkautschuk (FKM) kann bspw. auch in Form eines Perfluorkautschuks (FFKM) vorliegen.

Bei einer weiteren vorteilhaften Ausgestaltung der Erfindung weist die jeweilige Hauptisolierung und/oder die jeweilige Teilleiterisolierung Polytetrafluorethylen (PTFE) auf.

Die Verwendung von Polytetrafluorethylen für die jeweilige Hauptisolierung und/oder für die jeweilige Teilleiterisolierung bietet große Vorteile, auch gegenüber der Verwendung von dem oben schon erläuterten Polyetheretherketon (PEEK). Bspw. weist PTFE eine Dauergebrauchstemperatur von -200° C bis +260° C auf. Weiterhin weist PTFE eine nahezu vollständige chemische Beständigkeit auf, da die lineare Verbindung von Fluor und Kohlenstoff zu Polytetrafluorethylen durch die hohe Elektronegativität von Fluor eine der stärksten Bindungen in der anorganischen Chemie ergibt.

PTFE ist ebenso wie PEEK hydrolysebeständig, wobei auch die jeweilige Kriechbeständigkeit ähnlich gut ist, diese jedoch bei PTFE durch die Zugabe geeigneter Füllstoffe eingestellt wird. Durch die eng beieinanderliegenden statischen und dynamischen Reibwerte von PTFE ergeben sich hervorragende Gleiteigenschaften, welche den "Stick-Slip-Effekt" verhindern, d. h. also einen abrupten Wechsel vom Gleiten und Stoppen.

Vorzugsweise wird bei dem vorgeschlagenen fluidgekühlten Aktivteil, bei der vorgeschlagenen elektrischen Maschine bzw. bei dem vorgeschlagenen Antriebssystem ein Prozessfluid als Fluid eingesetzt. Wie oben schon erläutert, kann das Prozessfluid flüssig oder gasförmig vorliegen und insbesondere eine Prozessflüssigkeit, wie zum Beispiel Erdöl, oder ein Prozessgas, wie zum Beispiel Erdgas, sein. Dazu können insbesondere die erläuterten, vorteilhaften Materialien verwendet werden, insbesondere also Polyetheretherketon (PEEK) oder Polytetrafluorethylen (PTFE) für die jeweilige Hauptisolierung und/oder für die jeweilige Teilleiterisolierung und Fluorkautschuk (FKM) bzw. Perfluorkautschuk (FFKM) für diverse Dichtungen und Zwischenteile. Durch den Einsatz der genannten Materialien ist die vorliegende Erfindung somit prädestiniert für den Betrieb im Umfeld von sauren oder anderen aggressiven Prozessfluiden, welche zur Kühlung auch in das vorgeschlagene Aktivteil geführt werden.

Im Folgenden wird die Erfindung anhand der in den Figuren dargestellten Ausführungsbeispiele näher beschrieben und erläutert. Es zeigen:
- FIG 1-12: ein erstes bis fünftes Ausführungsbeispiel des vorgeschlagenen, fluidgekühlten Aktivteils, und
- FIG 13: ein Ausführungsbeispiel der vorgeschlagenen elektrischen Maschine und des vorgeschlagenen Antriebssystems.

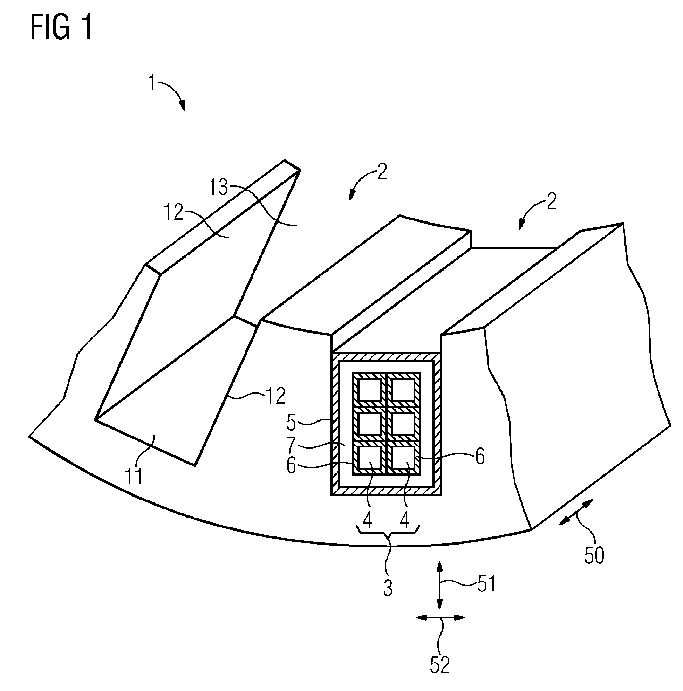

Figur 1 zeigt ein erstes Ausführungsbeispiel des vorgeschlagenen, fluidgekühlten Aktivteils 1, wobei ein perspektivischer Ausschnitt eines Querschnittes senkrecht zur axialen Richtung 50 durch das Aktivteil 1 dargestellt ist.

Das Aktivteil 1 ist im Wesentlichen hohlzylinderförmig ausgestaltet, so dass eine axiale Richtung 50, eine radiale Richtung 51 und eine Umfangsrichtung 52 definiert sind. Das Aktivteil 1 weist axial verlaufende Nuten 2 sowie elektrische Leiter 3 auf, welche jeweils zumindest abschnittsweise in der jeweiligen Nut 2 angeordnet sind. In Figur 1 ist der Übersichtlichkeit halber lediglich einer der Leiter 3 angedeutet.

Der jeweilige Leiter 3 setzt sich aus einer Mehrzahl von Teilleitern 4 zusammen. Zwischen dem jeweiligen Leiter 3 und der jeweiligen Nut 2 ist eine jeweilige Hauptisolierung 5 angeordnet, wobei der jeweilige Teilleiter 4 von einer jeweiligen Teilleiterisolierung 6 umgeben wird.

Weiterhin weist das Aktivteil einen jeweiligen Kühlkanal 7 zur Führung des Fluides, insbesondere eines Prozessfluides, auf, wobei der jeweilige Kühlkanal 7 zwischen der jeweiligen Hauptisolierung 5 und der jeweiligen Teilleiterisolierung 6 angeordnet ist.

Wie in Figur 1 angedeutet, weist die jeweilige Nut 2 einen Nutgrund 11, zwei Nutwände 12 sowie eine Nutöffnung 13 auf, wobei die Nuten 2 im Rahmen des Ausführungsbeispiels nach radial innen geöffnet sind. Prinzipiell können die Nuten 2 auch nach radial außen geöffnet sein.

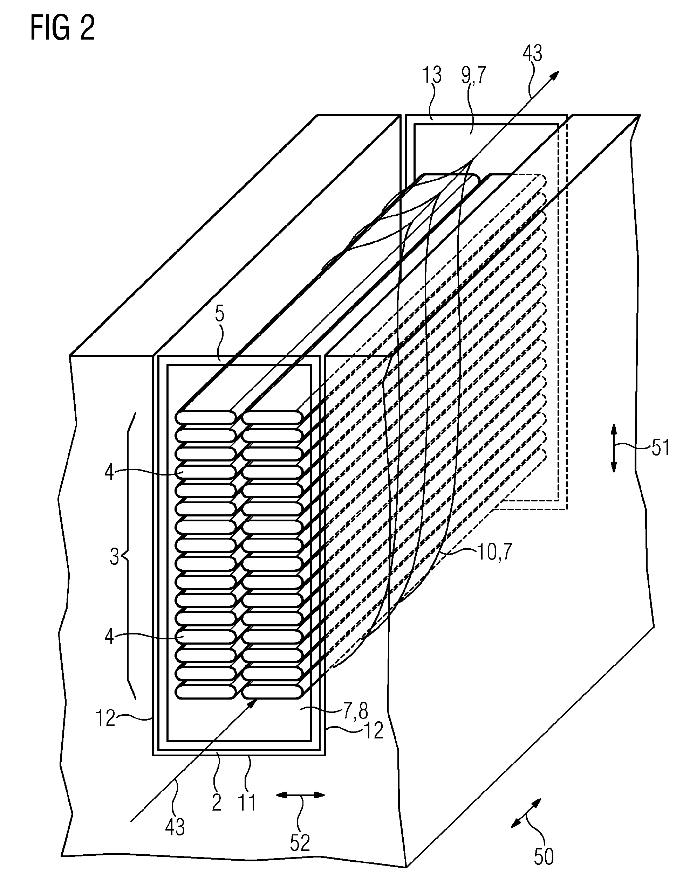

Figur 2 zeigt ein zweites Ausführungsbeispiel des vorgeschlagenen, fluidgekühlten Aktivteils 1. Gleiche Bezugszeichen wie in Figur 1 bezeichnen dabei gleiche Gegenstände.

Da das zweite Ausführungsbeispiel einige Ähnlichkeiten mit dem ersten Ausführungsbeispiel aufweist, werden im Folgenden einige Unterschiede erläutert. Das Aktivteil 1 des zweiten Ausführungsbeispiels zeichnet sich u.a. dadurch aus, dass eine definierte Strömungsrichtung 43 für das Fluid innerhalb der jeweiligen Nut 2 vorgegeben wird. Der jeweilige Kühlkanal 7 umfasst einen Einlasskanal 8, einen Auslasskanal 9 sowie einen jeweiligen Verbindungskanal 10, welcher den Einlasskanal 8 mit dem Auslasskanal 9 strömungstechnisch verbindet. Dabei sind der Einlasskanal 8 zwischen dem elektrischen Leiter 3 und dem Nutgrund 11 und der Auslasskanal 9 zwischen dem jeweiligen Leiter und der Nutöffnung 13 angeordnet. Der jeweilige Verbindungskanal 10 ist überwiegend zwischen dem Leiter 3 und einer der beiden Nutwände 12 angeordnet.

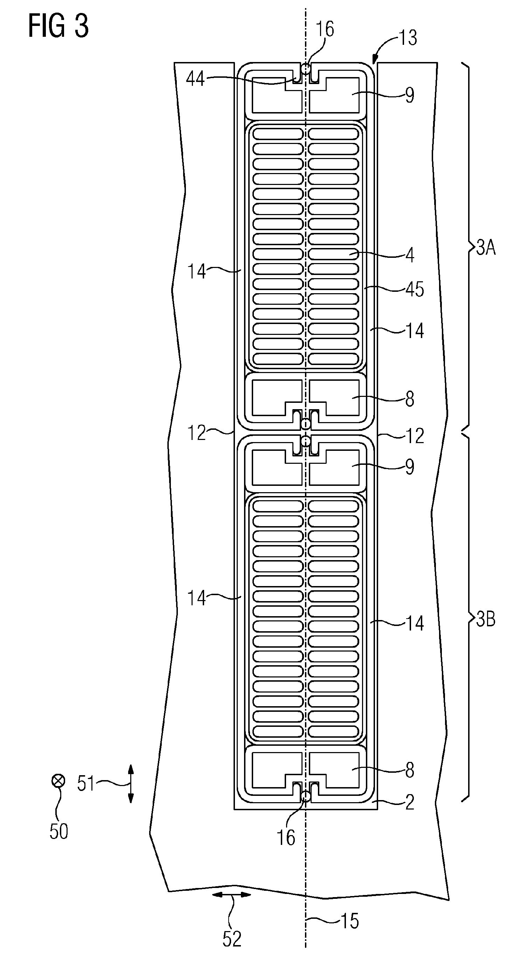

Figur 3 zeigt ein drittes Ausführungsbeispiel des vorgeschlagenen, fluidgekühlten Aktivteils 1, wobei ein Ausschnitt eines Querschnitts senkrecht zur axialen Richtung 50 durch das Aktivteil 1 dargestellt ist.

Im Rahmen des Ausführungsbeispiels sind in der jeweiligen Nut 2 zwei elektrische Leiter 3A, 3B vorgesehen, die in radialer Richtung 51 übereinander angeordnet sind. Bei dem Leiter 3A handelt es sich dabei um den oberen, der Nutöffnung 13 zugewandten Leiter und bei dem Leiter 3B um den unteren, dem Nutgrund 11 zugewandten Leiter. In einer Abwandlung des Ausführungsbeispiels kann jedoch auch nur einer der beiden Leiter 3A, 3B vorgesehen sein.

Jedem der beiden Leiter 3A, 3B ist eine jeweilige Hauptisolierung 5 zugeordnet, welche jeweils zwei im Wesentlichen C-förmige Isolier-Halbschalen 14 aufweist. Die beiden jeweiligen Isolier-Halbschalen 14 umschließen zum zusammen den jeweiligen Leiter 3A, 3B in einer Ebene senkrecht zur axialen Richtung 50. Die beiden Isolier-Halbschalen 14 sind dabei im Wesentlichen symmetrisch zur Nutmitte 15 in Umfangsrichtung 52 der jeweiligen Nut 2 angeordnet. In radialer Richtung 51 werden die beiden jeweiligen Isolier-Halbschalen 14 mittels eines jeweiligen Dichtelementes 16 abgedichtet, wobei das jeweilige Dichtelement 16 insbesondere einen Fluorkautschuk aufweist. Innerhalb eines Paares von Isolier-Halbschalen 14 sind dabei ein Einlasskanal 8 und ein Auslasskanal 9 angeordnet.

Um die Abdichtung der beiden jeweiligen Isolier-Halbschalen 14 zu vereinfachen und zuverlässiger zu gestalten, kann die jeweilige Isolier-Halbschale 14 im Bereich der Auflage- bzw. Berührungslinien jeweils eine Art Haken 44 aufweisen, der in radialer Richtung 51 zum jeweiligen Leiter 3A, 3B weist. Das erwähnte Dichtelement 16 ist, wie in Figur 3 angedeutet, zwischen zwei Haken 44 von zwei zusammengehörenden Isolier-Halbschalen 14 angeordnet. Die Haken 44 sind dabei als optional anzusehen. Ebenso optional ist ein Abstandshalter 45, welcher zwischen der Mehrzahl der Teilleiter 4 und der jeweiligen Isolier-Halbschale 14 angeordnet ist, welcher im Rahmen des Ausführungsbeispiels jedoch Raum für den jeweilige Verbindungskanal 10 schafft.

In radialer Richtung 51 kann zwischen den Isolier-Halbschalen 14 des oberen Leiters 3A und des unteren Leiters 3B ein nicht näher dargestelltes Zwischenelement zur Abdichtung bzw. zum Toleranzausgleich vorgesehen sein.

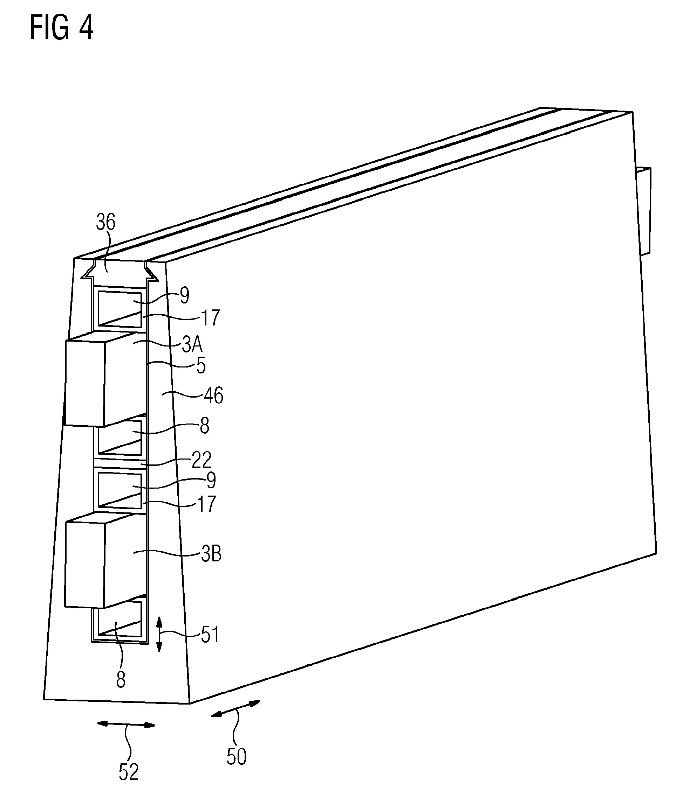

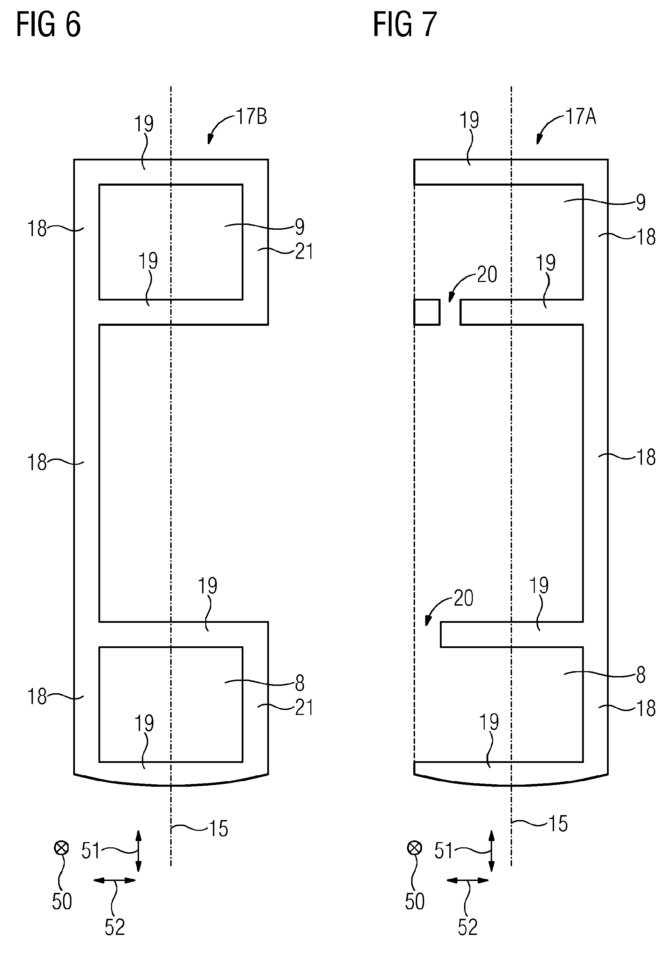

Die Figuren 4 bis 8 zeigen ein viertes Ausführungsbeispiel des vorgeschlagenen, fluidgekühlten Aktivteils 1, wobei die Figuren 6 und 7 einige Details illustrieren und ansonsten ein perspektivischer Ausschnitt eines Querschnittes senkrecht zur axialen Richtung 50 durch das Aktivteil 1 dargestellt ist.

Im Rahmen des Ausführungsbeispiels sind in der jeweiligen Nut 2 zwei elektrische Leiter 3A, 3B vorgesehen, die in radialer Richtung 51 übereinander angeordnet sind. Bei dem Leiter 3A handelt es sich dabei um den oberen, der Nutöffnung 13 zugewandten Leiter und bei dem Leiter 3B um den unteren, dem Nutgrund 11 zugewandten Leiter. In einer Abwandlung des Ausführungsbeispiels kann jedoch auch nur einer der beiden Leiter 3A, 3B vorgesehen sein.

Die jeweilige Hauptisolierung 5 ist derart ausgestaltet, dass sie den Nutgrund 11 und die beiden Nutwände 12 der jeweiligen Nut 2 größtenteils bedeckt.

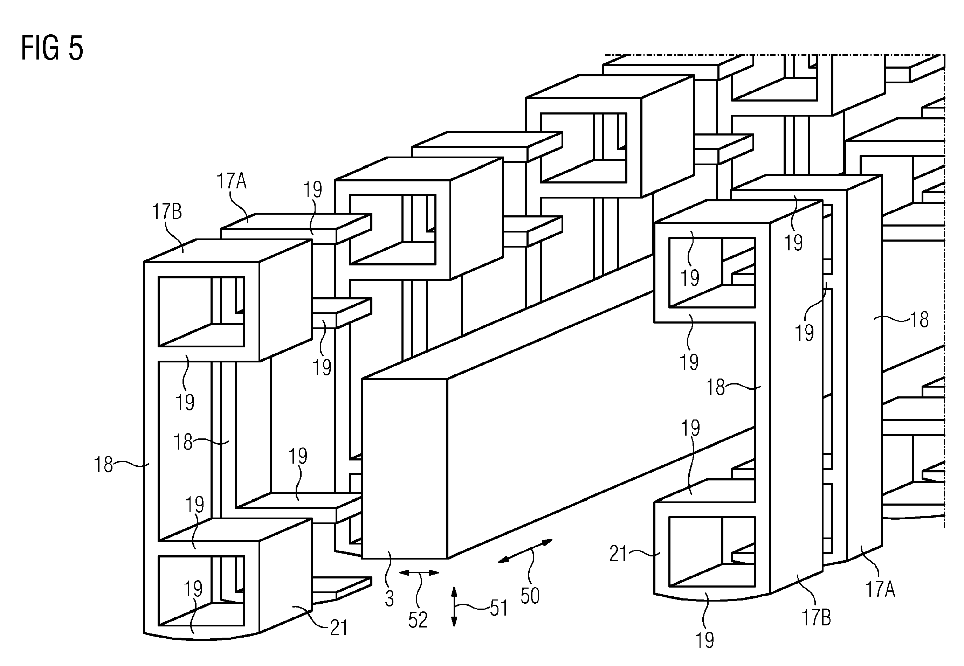

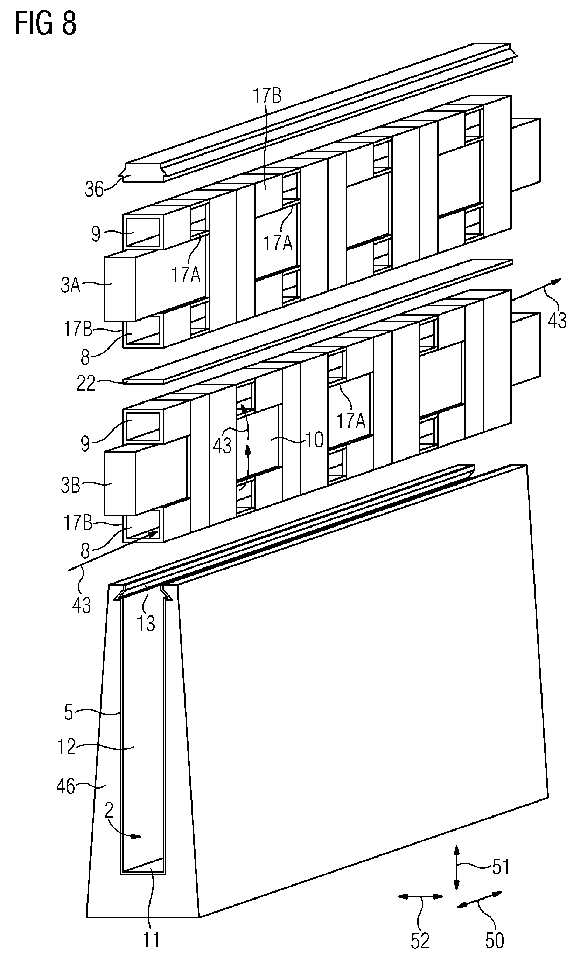

Wie vor allem durch die Figuren 5 und 8 deutlich wird, sind in axialer Richtung 50 eine Mehrzahl von Kanal-Halbschalen 17 hintereinander angeordnet, wobei einige der Kanal-Halbschalen 17 zu anderen der Kanal-Halbschalen 17 spiegelverkehrt in Bezug auf die Nutmitte 15 in Umfangsrichtung 52 der jeweiligen Nut 2 angeordnet sind. Die jeweilige Kanal-Halbschale 17 weist dabei in einer Ebene senkrecht zur axialen Richtung 50 einen im Wesentlichen U-förmigen Querschnitt auf und umschließt den jeweiligen Leiter 3A, 3B größtenteils.

Die jeweilige Kanal-Halbschale 17 weist dabei in einer Ebene senkrecht zur axialen Richtung 50 betrachtet einen Radialsteg 18 sowie zwei Paare von Umfangsstegen 19 auf. Der jeweilige Radialsteg 18 erstreckt sich in radialer Richtung am jeweiligen Leiter 3 entlang und der jeweilige Umfangssteg 19 weist in Umfangsrichtung 52, wobei die Umfangsstege 19 mittels des Radialsteges 18 verbunden sind.

Mittels der Umfangsstege 19 werden der jeweilige Einlasskanal 8 und der jeweilige Auslasskanal 9 wie folgt ausgestaltet. Im Bereich jenes Paares von Umfangsstegen 19, das sich näher am Nutgrund 11 (d.h. in den Figuren 4 bis 8 unten) befindet, ist der Einlasskanal 8 angeordnet und im Bereich jenes Paares von Umfangsstegen 19, dass sich näher an der Nutöffnung 13 (d.h. in den Figuren 4 bis 8 oben) befindet, ist der Auslasskanal 9 angeordnet.

Das Aktivteil 1 weist dabei erste Kanal-Halbschalen 17A auf, welche, wie in Figur 7 dargestellt, mittlere Umfangsstege 19 aufweisen, die eine jeweilige Durchgangsöffnung 20 (oberer der mittleren Umfangsstege 19 in Figur 7) aufweisen oder eine jeweilige Durchgangsöffnung 20 ausbilden, die zwischen dem jeweiligen, mittleren Umfangssteg 19 und der jeweiligen Hauptisolierung 5 verbleibt (unterer der mittleren Umfangsstege 19 in Figur 7). Die letztgenannte Ausgestaltung wird dadurch erreicht, dass der entsprechende Umfangssteg 19 in Umfangsrichtung etwas kürzer ausgestaltet ist als die übrigen Umfangsstege 19 und somit die Durchgangsöffnung 20 gebildet wird. Durch eine derartige Ausgestaltung der jeweiligen ersten Kanal-Halbschale 17A wird mittels zumindest einer der beiden mittleren Umfangsstege 19 zumindest ein Teil des jeweiligen Verbindungskanals 10 ausgestaltet. In einer Abwandlung des Ausführungsbeispiels kann die jeweilige erste Kanal-Halbschale 17A lediglich eine Durchgangsöffnung 20 oder zwei gleichartige der erläuterten Durchgangsöffnungen 20 aufweisen bzw. bilden.

Weiterhin weist das Aktivteil 1 zweite Kanal-Halbschalen 17B auf, bei denen jeweils die Umfangsstege 19 eines Paares oder beider Paare von Umfangsstegen 19 mittels eines jeweiligen Endsteges 21 verbunden sind, wie in Figur 6 dargestellt ist. Die zweiten Kanal-Halbschalen 17B sind dabei derart ausgestaltet, dass sie jeweils in einer Ebene senkrecht zur axialen Richtung 50 betrachtet einen rechteckigen Querschnitt zur Führung des jeweiligen Kühlkanals 7 aufweisen. Im vorliegenden Ausführungsbeispiel werden zwei solcher rechteckiger Querschnitte gebildet, einer für den Einlasskanal 8 und einer für den Auslasskanal 9.

In radialer Richtung 51 ist zwischen den Kanal-Halbschalen 17 des oberen Leiters 3A und des unteren Leiters 3B ein Zwischenelement 22 zur Abdichtung bzw. zum Toleranzausgleich vorgesehen.

Wie in Figur 8 mit den Pfeilen 43 für die Strömungsrichtung des Fluides angedeutet, wird das Fluid in den jeweiligen Einlasskanal 8 eingebracht und wird dort zunächst in axialer Richtung 50 mittels der zweiten Kanal-Halbschalen 17B geführt. Anschließend wird das Fluid mittels der ersten Kanal-Halbschalen 17A durch entsprechende Durchgangsöffnungen 20 in radialer Richtung 51 in den jeweiligen Verbindungskanal 10 geführt, um dann in den jeweiligen Auslasskanal 9 geleitet zu werden und schließlich in axialer Richtung 15 aus der Anordnung der Kanal-Halbschalen 17 herausgeführt zu werden.

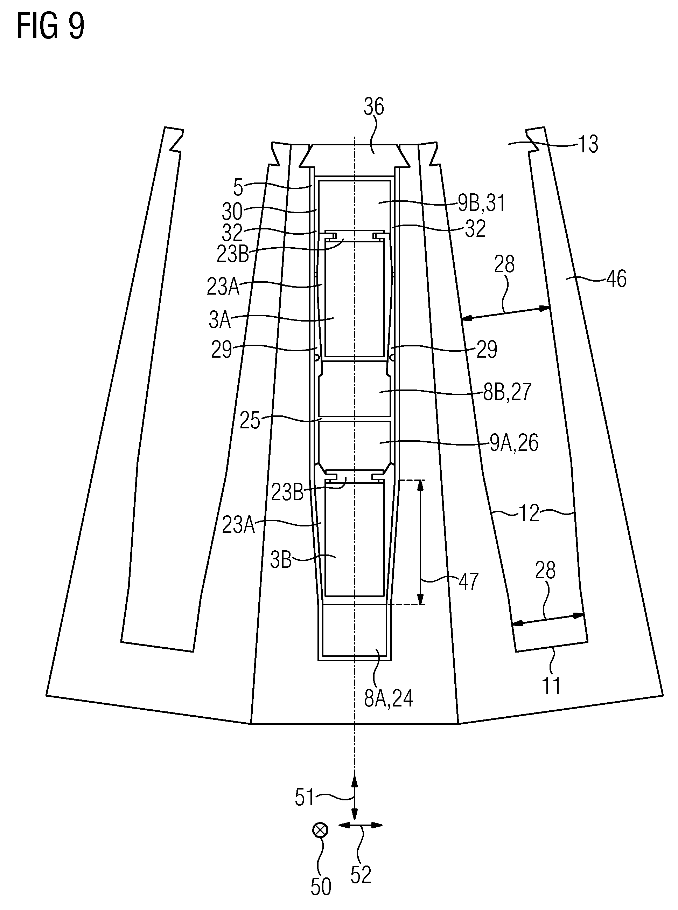

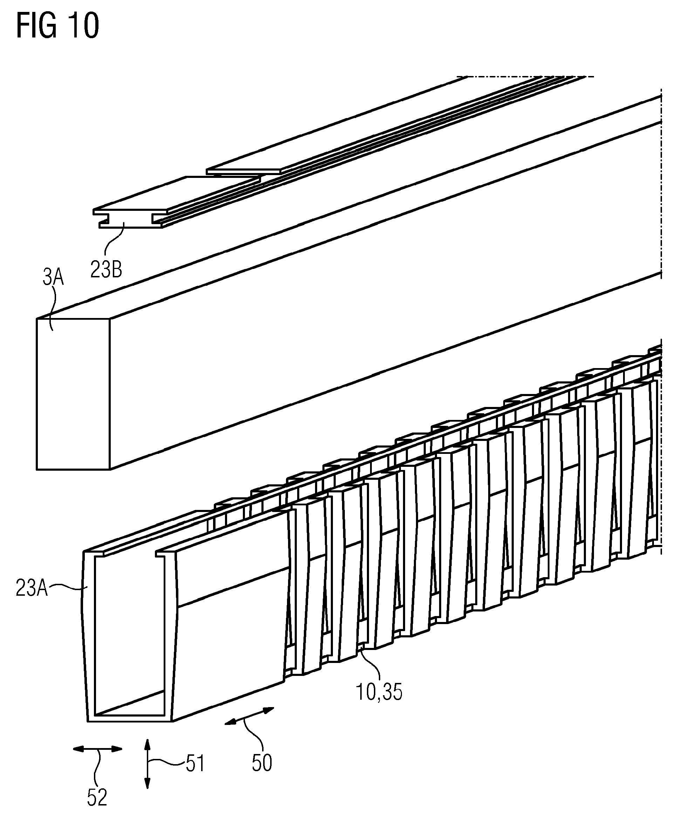

Die Figuren 9 bis 12 zeigen ein fünftes Ausführungsbeispiel des vorgeschlagenen, fluidgekühlten Aktivteils 1, wobei ein Ausschnitt bzw. ein perspektivischer Ausschnitt eines Querschnittes senkrecht zur axialen Richtung 50 durch das Aktivteil 1 dargestellt ist und in Figur 10 Details einer Leiter-Schale 23 für einen oberen elektrischen Leiter 3A dargestellt sind.

Im Rahmen des Ausführungsbeispiels sind in der jeweiligen Nut 2 zwei elektrische Leiter 3A, 3B vorgesehen, die in radialer Richtung 51 übereinander angeordnet sind. Bei dem Leiter 3A handelt es sich dabei um den oberen, der Nutöffnung 13 zugewandten Leiter und bei dem Leiter 3B um den unteren, dem Nutgrund 11 zugewandten Leiter. In einer Abwandlung des Ausführungsbeispiels kann jedoch auch nur einer der beiden Leiter 3A, 3B vorgesehen sein.

Die jeweilige Hauptisolierung 5 ist derart ausgestaltet, dass sie den Nutgrund 11 und die beiden Nutwände 12 der jeweiligen Nut 2 größtenteils bedeckt.

Bei dem vorliegenden Ausführungsbeispiel ist eine jeweilige Leiter-Schale 23 vorgesehen, welche den jeweiligen Leiter 3A, 3B in einer Ebene senkrecht zur axialen Richtung 50 umschließt. Die jeweilige Nut 2 weist einen Nutbereich 47 auf, entlang welchem die Nutbreite 28 in radialer Richtung 51 zum Nutgrund 11 hin abnimmt, so dass sich die jeweilige Nut 2 dort zum Nutgrund 11 hin verjüngt. Die jeweilige Leiter-Schale 23 des unteren Leiters 3B verjüngt sich in dem entsprechenden Bereich ebenfalls zum Nutgrund 11 hin, wobei die jeweiligen Verjüngungen derart ausgestaltet sind, dass die jeweilige Leiter-Schale 23 des unteren Leiters 3B formschlüssig zum Nutgrund 11 hin fixiert ist und zwischen dem Nutgrund 11 und der jeweiligen Leiter-Schale 23 des unteren Leiters 3B ein erster, axial verlaufender Hohlraum 24 für den ersten Einlasskanal 8A verbleibt. Insbesondere kann die Nutbreite 28 im Bereich des ersten Hohlraums 24 konstant bleiben.

Weiterhin ist ein jeweiliges erstes Einlegeteil 25 vorgesehen, welches in einer Ebene senkrecht zur axialen Richtung 50 einen H-förmigen Querschnitt aufweist. Das jeweilige erste Einlegeteil 25 ist zwischen der jeweiligen Leiter-Schale 23 des unteren Leiters 3B und der jeweiligen Leiter-Schale 23 des oberen elektrischen Leiters 3A angeordnet. Dabei ist das jeweilige erste Einlegeteil 25 derart ausgestaltet, dass zwischen der jeweiligen Leiter-Schale 23 des unteren Leiters 3B einerseits und dem jeweiligen, ersten Einlegeteil 25 andererseits ein zweiter, axial verlaufender Hohlraum 26 für einen ersten Auslasskanal 9A verbleibt. Weiterhin verbleibt zwischen der jeweiligen Leiter-Schale 23 des oberen Leiters 3A einerseits und dem jeweiligen, ersten Einlegeteil 25 andererseits ein dritter, axial verlaufender Hohlraum 27 für einen zweiten Einlasskanal 8B.

In einer Ebene senkrecht zur axialen Richtung 50 weist das jeweilige, erste Einlegeteil 25 zwei Außenstege 29 auf, die zur Nutöffnung 13 hin weisen und abschnittsweise in Umfangsrichtung 52 zwischen der jeweiligen Leiter-Schale 23 des oberen Leiters 3A einerseits und der jeweiligen Nutwand 12 andererseits angeordnet sind. Die beiden Außenstege 29 des jeweiligen, ersten Einlegeteils 25 verjüngen sich zur Nutöffnung 13 hin und die jeweilige Leiter-Schale 23 des oberen Leiters 3A verjüngt sich abschnittsweise zum Nutgrund 11 hin, wobei die Verjüngungen derart ausgestaltet sind, dass die jeweilige Leiter-Schale 23 des oberen Leiters 3A kraftschlüssig in radialer Richtung 51 fixiert ist.

Weiterhin ist ein jeweiliges zweites Einlegeteil 30 vorgesehen, welches jeweils in einer Ebene senkrecht zur axialen Richtung 50 einen U-förmigen Querschnitt aufweist. Das jeweilige, zweite Einlegeteil 30 ist dabei derart angeordnet und ausgestaltet, dass zwischen der jeweiligen Leiter-Schale 23 des oberen Leiters 3A einerseits und dem jeweiligen, zweiten Einlegeteil 30 andererseits ein vierter, axialverlaufender Hohlraum 31 für einen zweiten Auslasskanal 9B verbleibt.

Das jeweilige, zweite Einlegeteil 30 weist in einer Ebene senkrecht zur axialen Richtung 50 zwei Innenstege 32 auf, die zum Nutgrund 11 hin weisen und abschnittsweise in Umfangsrichtung zwischen der jeweiligen Leiter-Schale 23 des oberen Leiters 3A einerseits und der jeweiligen Nutwand 12 andererseits angeordnet sind. Die beiden Innenstege 32 des jeweiligen, zweiten Einlegeteils 30 verjüngen sich dabei zum Nutgrund 11 hin, wobei die jeweilige Leiter-Schale 23 des oberen Leiters 3A sich abschnittsweise zur Nutöffnung 13 hin verjüngt. Die Verjüngungen sind dabei derart ausgestaltet, dass die jeweilige Leiter-Schale 23 des oberen Leiters 3A und das jeweilige zweite Einlegeteil 30 kraftschlüssig in radialer Richtung 51 fixiert sind.

Im Rahmen des Ausführungsbeispiels ist die jeweilige Leiter-Schale 23 zweiteilig ausgestaltet, indem sie ein erstes Leiter-Schalenteil 23A, welches im Wesentlichen einen U-förmigen Querschnitt in einer Ebene senkrecht zur axialen Richtung 50 aufweist, sowie ein zweites Leiter-Schalenteil 23B umfasst, wie in den Figuren 9 und 10 dargestellt ist. Das zweite Leiter-Schalenteil 23B ist dabei als eine Art Deckel für das erste Leiter-Schalenteil 23A ausgestaltet. Um den jeweiligen Leiter 3A, 3B besonders gut zur umschließen, weist das zweite Leiter-Schalenteil 23B zwei Nuten und das erste Leiter-Schalenteil 23A zwei entsprechende Federn für eine jeweilige Nut-Feder-Verbindung auf. Zur Abdichtung und somit zum Schutz des jeweiligen Leiters 3A, 3B vor dem, in dem jeweiligen Hohlraum strömenden Fluid kann im Bereich der Nut-Feder-Verbindung insbesondere ein Fluorkautschuk aufgrund seiner oben erläuterten, vorteilhaften Eigenschaften eingesetzt werden

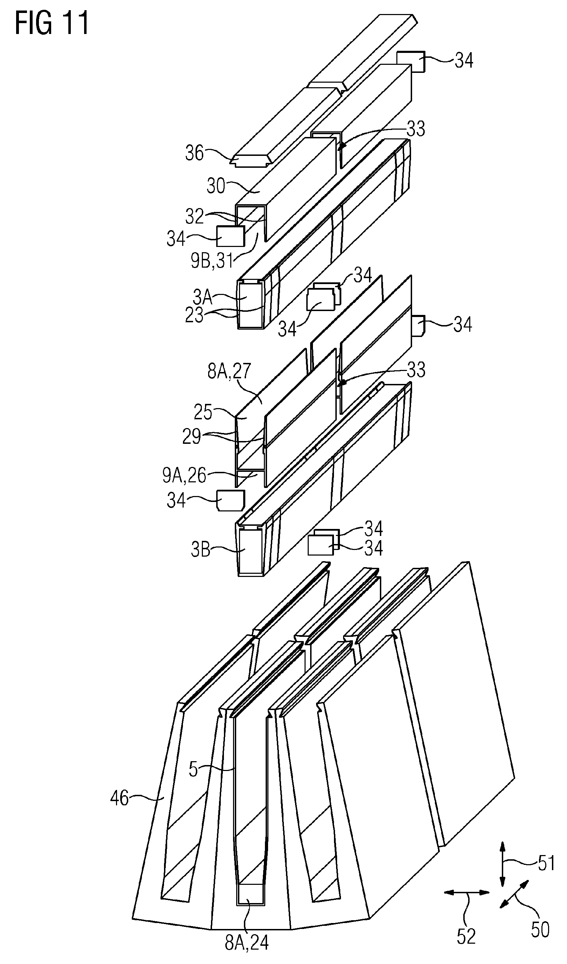

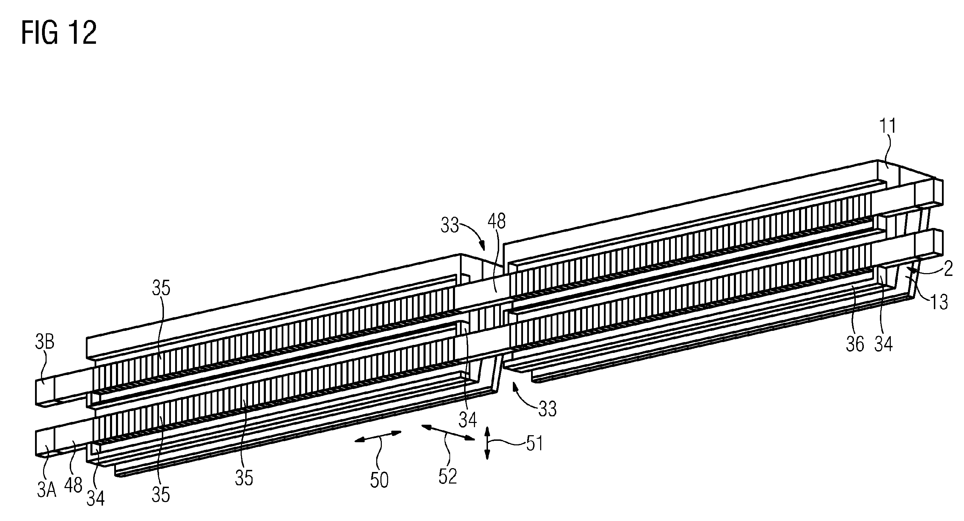

Wie vor allem durch die Figuren 11 und 12 deutlich wird, sind im Rahmen des Ausführungsbeispiels zwei jeweilige Einlegeteile 15, 30 in axialer Richtung 50 hintereinander angeordnet, wobei im Bereich der axialen Mitte zwischen den beiden jeweiligen Einlegeteilen 25, 30 eine jeweilige axiale Lücke 33 verbleibt. Der erste Hohlraum 24 und der dritte Hohlraum 27 werden im Bereich der axialen Mitte mittels eines jeweiligen Deckels 34 geschlossen. Weitere Deckel 34 sind zur Schließung des zweiten Hohlraums 26 und des vierten Hohlraums 31 an der jeweiligen axialen Stirnseite vorgesehen.

Wie in Figur 10 illustriert, weist die jeweilige Leiterschale 23 Aussparungen 35 auf, die in radialer Richtung 51 verlaufen und den jeweiligen Verbindungskanal 10 ausbilden.

Um die Gefahr möglicher elektrischer Durchschläge im Bereich der Wickelköpfe an der jeweiligen axialen Stirnseite des Aktivteils 1 zu minimieren, sind keine derartigen Aussparungen 35 in der jeweiligen Leiter-Schale 23 in unmittelbarer Nachbarschaft der jeweiligen axialen Stirnseite vorgesehen. Analog sind auch in unmittelbarer Nachbarschaft der erläuterten Lücke 33 keine derartigen Aussparungen 35 in der jeweiligen Leiter-Schale 23 vorgesehen.

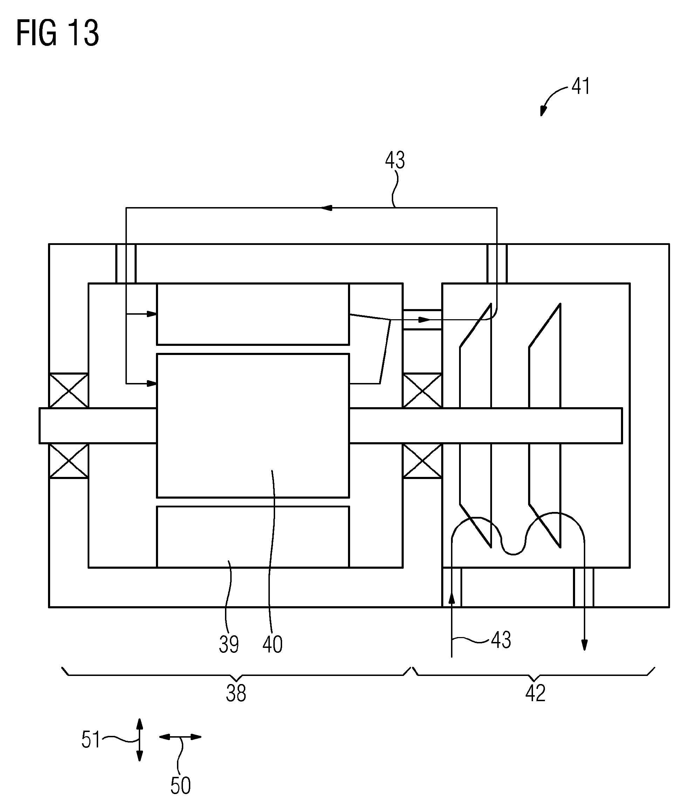

Figur 13 zeigt ein Ausführungsbeispiel der vorgeschlagenen elektrischen Maschine 38 und des vorgeschlagenen Antriebssystems 41, wobei ein Querschnitt längst der axialen Richtung 50 dargestellt ist.

Die elektrische Maschine 38 weist einen Stator 39 sowie einen drehbar gelagerten Rotor 40 auf, wobei der Stator 39 und/oder der Rotor 40 als das vorgeschlagene, fluidgekühlte Aktivteil ausgestaltet sind. Die elektrische Maschine 38 ist mit einer elektrischen Spannung im Bereich von einigen kV, insbesondere einigen 10 kV, betreibbar.

Die elektrische Maschine 38 ist Teil des Antriebssystems 41, welches weiterhin eine Fluidenergiemaschine 42 für das Fluid aufweist, wobei die Fluidenergiemaschine 42 als Kompressor, insbesondere für ein Prozessgas, oder als Pumpe, insbesondere für eine Prozessflüssigkeit, ausgestaltet ist. Mit den Pfeilen 43 sind dabei die Strömungen des Fluids in der elektrischen Maschine 38 und in der Fluidenergiemaschine 42 angedeutet.

Zusammenfassend betrifft die Erfindung ein fluidgekühltes Aktivteil für eine elektrische Maschine, wobei das Aktivteil im Wesentlichen zylinderförmig oder hohlzylinderförmig ausgestaltet ist, aufweisend axial verlaufende Nuten, zumindest einen elektrischen Leiter, der jeweils zumindest abschnittsweise in der jeweiligen Nut angeordnet ist und der sich aus einer Mehrzahl von Teilleitern zusammensetzt, eine jeweilige Hauptisolierung, welche zwischen dem jeweiligen Leiter und der jeweiligen Nut angeordnet ist, und eine jeweilige Teilleiterisolierung, welche den jeweiligen Teilleiter umgibt. Weiterhin betrifft die Erfindung eine elektrische Maschine aufweisend ein derartiges, als Stator ausgestaltetes, fluidgekühltes Aktivteil und/oder ein derartiges, als drehbar gelagerten Rotor ausgestaltetes, fluidgekühltes Aktivteil, wobei die elektrische Maschine mit einer elektrischen Spannung im Bereich von zumindest einigen kV, vorzugsweise einigen 10 kV, betreibbar ist. Schließlich betrifft die Erfindung ein Antriebssystem aufweisend eine derartige elektrische Maschine und eine Fluidenergiemaschine für das Fluid, wobei die Fluidenergiemaschine bspw. als Kompressor oder-, insbesondere für ein Prozessgas, oder als Pumpe, insbesondere für eine Prozessflüssigkeit, ausgestaltet ist.

Um Nachteile aus dem Stand der Technik zu überwinden und ein fluidgekühltes Aktivteil bereitzustellen, welches leistungsstark, kompakt und insbesondere beständig im Umfeld des Fluides bzw. eines Prozessfluides ist, wird vorgeschlagen, dass das Aktivteil einen jeweiligen Kühlkanal zur Führung des Fluides, insbesondere eines Prozessfluides, aufweist, wobei der jeweilige Kühlkanal zwischen der jeweiligen Hauptisolierung und der jeweiligen Teilleiterisolierung angeordnet ist. Weiterhin werden eine entsprechende elektrische Maschine und ein entsprechendes Antriebssystem vorgeschlagen.

## Patentansprüche

1. Fluidgekühltes Aktivteil (1) für eine elektrische Maschine (38), wobei das Aktivteil (1) im Wesentlichen zylinderförmig oder hohlzylinderförmig ausgestaltet ist, aufweisend
- axial verlaufende Nuten (2),
- zumindest einen elektrischen Leiter (3), der jeweils zumindest abschnittsweise in der jeweiligen Nut (2) angeordnet ist und der sich aus einer Mehrzahl von Teilleitern (4) zusammensetzt,
- eine jeweilige Hauptisolierung (5), welche zwischen dem jeweiligen Leiter (3) und der jeweiligen Nut (2) angeordnet ist, und
- eine jeweilige Teilleiterisolierung (6), welche den jeweiligen Teilleiter (4) umgibt,
**gekennzeichnet durch**
- einen jeweiligen Kühlkanal (7) zur Führung des Fluides, insbesondere eines Prozessfluides,
wobei der jeweilige Kühlkanal (7) zwischen der jeweiligen Hauptisolierung (5) und der jeweiligen Teilleiterisolierung (6) angeordnet ist.

2. Fluidgekühltes Aktivteil (1) nach Anspruch 1,
wobei der jeweilige Kühlkanal (7) einen Einlasskanal (8), einen Auslasskanal (9) sowie einen jeweiligen Verbindungskanal (10) zur strömungstechnischen Verbindung des Einlasskanals (8) mit dem Auslasskanal (9) aufweist,
wobei die jeweilige Nut (2) einen Nutgrund (11) und zwei Nutwände (12) aufweist,
wobei der jeweilige Einlasskanal (8) bzw. Auslasskanal (9) zwischen dem jeweiligen Leiter (3) einerseits und dem Nutgrund (11) bzw. der dem Nutgrund (11) in radialer Richtung (51) gegenüberliegenden Nutöffnung (13) andererseits angeordnet ist,
wobei der jeweilige Verbindungskanal (10) zumindest überwiegend zwischen dem jeweiligen Leiter (3) einerseits und einer der beiden Nutwände (12) andererseits angeordnet ist.

3. Fluidgekühltes Aktivteil (1) nach einem der vorhergehenden Ansprüche,
wobei die jeweilige Hauptisolierung (5) zwei im Wesentlichen C-förmige Isolier-Halbschalen (14) aufweist, welche zusammen den jeweiligen Leiter (3) in einer Ebene senkrecht zur axialen Richtung (50) im Wesentlichen umschließen,
wobei die beiden jeweiligen Isolier-Halbschalen (14) im Wesentlichen symmetrisch zur Nutmitte (15) in Umfangsrichtung (52) der jeweiligen Nut (2) angeordnet sind,
wobei die beiden jeweiligen Isolier-Halbschalen (14) mittels eines jeweiligen Dichtelementes (16), aufweisend insbesondere einen Fluorkautschuk, in radialer Richtung (51) abgedichtet sind.

4. Fluidgekühltes Aktivteil (1) nach Anspruch 1 oder 2,
wobei die jeweilige Hauptisolierung (5) den Nutgrund (11) und die zwei Nutwände (12) der jeweiligen Nut (2) zumindest größtenteils bedeckt,
wobei eine Mehrzahl von Kanal-Halbschalen (17) in axialer Richtung (50) hintereinander angeordnet ist,
wobei die jeweilige Kanal-Halbschale (17) in einer Ebene senkrecht zur axialen Richtung (50) einen im Wesentlichen U-förmigen Querschnitt aufweist und den jeweiligen Leiter (3) in dieser Ebene größtenteils umschließt.

5. Fluidgekühltes Aktivteil (1) nach Anspruch 2 und 4,
wobei die jeweilige Kanal-Halbschale (17) in einer Ebene senkrecht zur axialen Richtung (50) betrachtet zumindest einen Radialsteg (18), welcher sich jeweils in radialer Richtung (51) am jeweiligen Leiter (3) entlang erstreckt, sowie zwei Paare von in Umfangsrichtung (52) weisenden Umfangsstegen (19) aufweist, die mittels des Radialsteges (18) verbunden sind,
wobei das eine Paar Umfangsstege (19) zur Ausbildung des jeweiligen Einlasskanals (8) und das andere Paar Umfangsstege (19) zur Ausbildung des jeweiligen Auslasskanals (9) ausgestaltet ist,
wobei bei zumindest einer ersten Kanal-Halbschale (17A) jeweils zumindest einer der beiden mittleren Umfangsstege (19) zur Ausbildung zumindest eines Teils des jeweiligen Verbindungskanals (10) ausgestaltet ist.

6. Fluidgekühltes Aktivteil (1) nach Anspruch 5,
wobei zwischen zumindest einem der beiden mittleren Umfangsstege (19) der jeweiligen ersten Kanal-Halbschale (17A) einerseits und der jeweiligen Hauptisolierung (5) andererseits eine jeweilige Durchgangsöffnung (20) verbleibt und/oder zumindest einer der beiden mittleren Umfangsstege (19) der jeweiligen ersten Kanal-Halbschale (17A) eine jeweilige Durchgangsöffnung (20) aufweist.

7. Fluidgekühltes Aktivteil (1) nach Anspruch 5 oder 6,
wobei bei zumindest einer zweiten Kanal-Halbschale (17B) jeweils die Umfangsstege (19) zumindest eines der zwei Paare von Umfangsstegen (19) derart mittels eines jeweiligen Endsteges (21) verbunden sind, dass die jeweilige zweite Kanal-Halbschale (17B) in einer Ebene senkrecht zur axialen Richtung (50) betrachtet einen rechteckigen Querschnitt zur Führung des jeweiligen Kühlkanals (7) aufweist.

8. Fluidgekühltes Aktivteil (1) nach einem der Ansprüche 3 bis 7,
wobei in der jeweiligen Nut (2) zumindest zwei elektrische Leiter (3A, 3B) in radialer Richtung (51) übereinander angeordnet sind,
wobei ein jeweiliges Zwischenelement (22) zur Abdichtung und/oder zum Toleranzausgleich vorgesehen ist, welches in radialer Richtung (51) zwischen einer der Halbschalen (14, 17) des oberen elektrischen Leiters (3A) einerseits und einer der Halbschalen (14, 17) des unteren elektrischen Leiters (3B) andererseits angeordnet ist.

9. Fluidgekühltes Aktivteil (1) nach Anspruch 1 oder 2,
wobei die jeweilige Hauptisolierung (5) den Nutgrund (11) und die zwei Nutwände (12) der jeweiligen Nut (2) zumindest größtenteils bedeckt,
wobei in der jeweiligen Nut (2) zumindest zwei elektrische Leiter (3) in radialer Richtung (51) übereinander angeordnet sind,
wobei eine jeweilige Leiter-Schale (23) vorgesehen ist, welche den jeweiligen Leiter (3) in einer Ebene senkrecht zur axialen Richtung (50) umschließt,
wobei sich sowohl die jeweilige Nut (2) zumindest im Bereich des unteren elektrischen Leiters (3B) als auch die jeweilige Leiter-Schale (23) des unteren elektrischen Leiters (3B) derart zum Nutgrund (11) hin verjüngen, dass die jeweilige Leiter-Schale (23) des unteren Leiters (3B) formschlüssig zum Nutgrund (11) hin fixiert ist und zwischen dem Nutgrund (11) und der jeweiligen Leiter-Schale (23) des unteren elektrischen Leiters (3B) ein erster, axial verlaufender Hohlraum (24), insbesondere für einen ersten Einlasskanal (8A), verbleibt.

10. Fluidgekühltes Aktivteil (1) nach Anspruch 9,
wobei zumindest ein erstes Einlegeteil (25) vorgesehen ist, welches jeweils in einer Ebene senkrecht zur axialen Richtung (50) einen H-förmigen Querschnitt aufweist,
wobei das jeweilige, erste Einlegeteil (25) zwischen der jeweiligen Leiter-Schale (23) des unteren Leiters (3B) einerseits und der jeweiligen Leiter-Schale (23) des oberen elektrischen Leiters (3A) andererseits angeordnet ist und derart ausgestaltet ist, dass zwischen der jeweiligen Leiter-Schale (23) des unteren Leiters (3B) bzw. des oberen Leiters (3A) einerseits und dem jeweiligen, ersten Einlegeteil (25) andererseits ein zweiter bzw. dritter, axial verlaufender Hohlraum (26 bzw. 27), insbesondere für einen ersten Auslasskanal (9A) bzw. einen zweiten Einlasskanal (8B), verbleibt.

11. Fluidgekühltes Aktivteil (1) nach Anspruch 10,
wobei das jeweilige, erste Einlegeteil (25) in einer Ebene senkrecht zur axialen Richtung (50) zwei Außenstege (29) aufweist, die zur Nutöffnung (13) hin weisen und zumindest abschnittsweise in Umfangsrichtung (52) zwischen der jeweiligen Leiter-Schale (23) des oberen Leiters (3A) einerseits und der jeweiligen Nutwand (12) andererseits angeordnet sind,
wobei sich die beiden Außenstege (29) zur Nutöffnung (13) hin und die jeweilige Leiter-Schale (23) des oberen Leiters (3A) abschnittsweise zum Nutgrund (11) hin derart verjüngen, dass die jeweilige Leiter-Schale (23) des oberen Leiters (3A) kraftschlüssig in radialer Richtung (51) hin fixiert ist.

12. Fluidgekühltes Aktivteil (1) nach Anspruch 10 oder 11,
wobei zumindest ein zweites Einlegeteil (30) vorgesehen ist, welches jeweils in einer Ebene senkrecht zur axialen Richtung (50) einen U-förmigen Querschnitt aufweist,
wobei das jeweilige, zweite Einlegeteil (30) derart angeordnet und ausgestaltet ist, dass zwischen der jeweiligen Leiter-Schale (23) des oberen Leiters (3A) einerseits und dem jeweiligen, zweiten Einlegeteil (30) andererseits ein vierter, axial verlaufender Hohlraum (31), insbesondere für einen zweiten Auslasskanal (9B), verbleibt.

13. Fluidgekühltes Aktivteil (1) nach Anspruch 12,
wobei das jeweilige, zweite Einlegeteil (30) in einer Ebene senkrecht zur axialen Richtung (50) zwei Innenstege (32) aufweist, die zum Nutgrund (11) hin weisen und zumindest abschnittsweise in Umfangsrichtung (52) zwischen der jeweiligen Leiter-Schale (23) des oberen Leiters (3A) einerseits und der jeweiligen Nutwand (12) andererseits angeordnet sind,
wobei sich die beiden Innenstege (32) zum Nutgrund (11) hin und die jeweilige Leiter-Schale (23) des oberen Leiters (3A) abschnittsweise zur Nutöffnung (13) hin derart verjüngen, dass die jeweilige Leiter-Schale (23) des oberen Leiters (3A) und das jeweilige zweite Einlegeteil (30) kraftschlüssig in radialer Richtung (51) fixiert sind.

14. Fluidgekühltes Aktivteil (1) nach Anspruch 12 oder 13,
wobei in axialer Richtung (50) zwei jeweilige Einlegeteile (25, 30) hintereinander angeordnet sind und im Bereich der axialen Mitte zwischen den beiden jeweiligen Einlegeteilen (25, 30) eine jeweilige axiale Lücke (33) verbleibt,
wobei der erste Hohlraum (24) und der dritte Hohlraum (27) im Bereich der axialen Mitte mittels eines jeweiligen Deckels (34) geschlossen sind,
wobei der zweite Hohlraum (26) und der vierte Hohlraum (31) an der jeweiligen axialen Stirnseite mittels eines jeweiligen Deckels (34) geschlossen sind.

15. Fluidgekühltes Aktivteil (1) nach einem der Ansprüche 9 bis 14,
wobei die jeweilige Leiter-Schale (23) in radialer Richtung (51) verlaufende Aussparungen (35) zur Ausbildung des jeweiligen Verbindungskanals (10) aufweist.

16. Fluidgekühltes Aktivteil (1) nach einem der vorhergehenden Ansprüche,
wobei die jeweilige Nut (2) in radialer Richtung (51) im Bereich der Nutöffnung (13) mittels eines Nutverschluss-Elementes (36) verschlossen ist,
wobei zwischen dem jeweiligen Nutverschluss-Element (36) und dem zumindest einen Leiter (3) ein Toleranzausgleichs-Element angeordnet ist.

17. Fluidgekühlte Aktivteil (1) nach einem der vorhergehenden Ansprüche,
wobei die jeweilige Hauptisolierung (5) und/oder die jeweilige Teilleiterisolierung (6) Polytetrafluorethylen (PTFE) aufweist.

18. Elektrische Maschine (38) aufweisend
- ein als Stator (39) ausgestaltetes, fluidgekühltes Aktivteil (1) nach einem der vorhergehenden Ansprüche und/oder
- ein als drehbar gelagerten Rotor (40) ausgestaltetes, fluidgekühltes Aktivteil (1) nach einem der vorhergehenden Ansprüche,
wobei die elektrische Maschine (38) mit einer elektrischen Spannung im Bereich von zumindest einigen kV, vorzugsweise einigen 10 kV, betreibbar ist.

19. Antriebssystem (41) aufweisend
- eine elektrische Maschine (38) nach Anspruch 18 und
- eine Fluidenergiemaschine (42) für das Fluid,
wobei die Fluidenergiemaschine (42) bspw. als Kompressor, insbesondere für ein Prozessgas, oder als Pumpe, insbesondere für eine Prozessflüssigkeit, ausgestaltet ist.
